(19) Europäisches Patentamt / European Patent Office / Office européen des brevets

(11) **EP 4 641 996 A1**

(12) **EUROPEAN PATENT APPLICATION**
published in accordance with Art. 153(4) EPC

(43) Date of publication:
**29.10.2025   Bulletin 2025/44**

(21) Application number: **23906043.7**

(22) Date of filing: **21.12.2023**

(51) International Patent Classification (IPC):
**H04L 41/16** $^{(2022.01)}$

(52) Cooperative Patent Classification (CPC):
**H04L 41/16**

(86) International application number:
**PCT/CN2023/140625**

(87) International publication number:
**WO 2024/131885 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **22.12.2022   CN 202211656563**

(71) Applicant: **Beijing Unisoc Communications Technology Co., Ltd**
**Beijing 100083 (CN)**

(72) Inventor: **WANG, Hualei**
**Beijing 100083 (CN)**

(74) Representative: **Mewburn Ellis LLP**
**Aurora Building**
**Counterslip**
**Bristol BS1 6BX (GB)**

(54) **COMMUNICATION METHOD AND APPARATUS, AND TERMINAL DEVICE, NETWORK DEVICE AND CHIP**

(57)    The present application discloses a communication method and apparatus, and a terminal device, a network device and a chip, and relates to the field of communication technology. The method includes the following. The terminal device sends a first information, where the first information includes request information and/or notification information, the request information is used to request a network to decide a state of an Artificial Intelligence (AI) model, and the notification information is used to notify the network of a decision result information of the state of the AI model. Accordingly, the network device receives the first information. As can be seen, to decide the state of the AI model, the first information is introduced in the present application, where the first information includes the request information and the notification information. The terminal device can achieve decision on the state of the AI model between the terminal device and the network device by sending the request information. The terminal device can synchronize the decision result of the AI model between the terminal device and the network device by sending the notification information, to ensure the consistency of the state of the AI model.

```
┌──────────────────┐                              ┌─────────────────┐
│ TERMINAL DEVICE  │                              │ NETWORK DEVICE  │
└──────────────────┘                              └─────────────────┘
         │                                                 │
         │  S310, FIRST INFORMATION, WHERE THE FIRST       │
         │  INFORMATION INCLUDES REQUEST INFORMATION        │
         │  AND/OR NOTIFICATION INFORMATION, THE REQUEST    │
         │  INFORMATION IS USED TO REQUEST A NETWORK TO     │
         │  DECIDE A STATE OF AN AI MODEL, AND THE          │
         │  NOTIFICATION INFORMATION IS USED TO NOTIFY      │
         │  THE NETWORK OF A DECISION RESULT INFORMATION    │
         │  OF THE STATE OF THE AI MODEL                    │
         │ ──────────────────────────────────────────────► │
         │                                                 │
```

FIG. 3

**Description**

CROSS-REFERENCE TO RELATED APPLICATION(S)

This application claims priority to Chinese Patent Application No. 202211656563.7, filed December 22, 2022, and entitled "COMMUNICATION METHOD AND APPARATUS, AND TERMINAL DEVICE, NETWORK DEVICE AND CHIP", the entire disclosure of which is hereby incorporated by reference.

TECHNICAL FIELD

The present application relates to the field of communication technology, and in particular to a communication method and apparatus, and a terminal device, a network device and a chip.

BACKGROUND

The artificial Intelligence (AI) technology can solve some problems that are difficult to solve with traditional modeling methods, such as some nonlinear problems and problems with overly complex parameters. By training with a large amount of data, some problem-solving modes can be established and more accurate prediction results can be provided. AI can include Machine Learning (ML), Deep Learning (DL), etc., and the AI model can include various linear and nonlinear network models, such as linear regression, vector machines, Convolutional Neural Networks (CNN), Deep Neural Networks (DNN), etc.

With the continuous development of the AI technology and the continuous evolution of the wireless communication system, 3rd Generation Partnership Project (3GPP) is currently discussing the combination of the AI technology and the wireless communication technology. However, how to combine the AI technology with the wireless communication technology requires further study.

SUMMARY

The present application provides a communication method and apparatus, a terminal device, a network device and a chip, to solve the problem of how to combine the AI technology with the wireless communication technology.

In the first aspect, a communication method is provided in the present application. The method includes: sending first information, where the first information includes request information and/or notification information, the request information is used to request a network to decide a state of an Artificial Intelligence (AI) model, and the notification information is used to notify the network of a decision result information of the state of the AI model.

As can be seen, to decide the state of the AI model, the first information is introduced in embodiments of the present application, where the first information may include the request information and/or the notification information. The request information can be used to request the network to decide the state of the AI model, and the notification information can be used to notify the network of the decision result information of the state of the AI model.

For some terminal devices, since the terminal device may need to request the network device to decide the state of the AI model, in embodiments of the present application, the decision on the state of the AI model between the terminal device and the network device can be achieved through the request information.

For some terminal devices, since the terminal device may have decided the state of the AI model itself, to ensure that the network can also be synchronized to know the decision result of the terminal device on the AI model and to avoid that the AI model is not synchronized between the terminal device and the network, in embodiments of the present application, the network can be informed of the decision result information of the state of the AI model through the notification information. As such, the decision result of the AI model can be synchronized between the terminal device and the network device and the consistency of the state of the AI model can be ensured.

In a second aspect, a communication method is provided in the present application. The method includes: receiving first information, where the first information includes request information and/or notification information, the request information is used to request a network to decide a state of an Artificial Intelligence (AI) model, and the notification information is used to notify the network of a decision result information of the state of the AI model.

In a third aspect, a communication apparatus is provided in the present application. The communication apparatus includes a sending unit configured to send first information, where the first information includes request information and/or notification information, the request information is used to request a network to decide a state of an Artificial Intelligence (AI) model, and the notification information is used to notify the network of a decision result information of the state of the AI model.

In a fourth aspect, a communication apparatus is provided in the present application. The communication apparatus includes a receiving unit configured to receive first information, where the first information includes request information and/or notification information, the request information is used to request a network to decide a state of an Artificial Intelligence (AI) model, and the notification information is used to notify the network of a decision result information of the state of the AI model.

In a fifth aspect, the steps in the method designed in the first aspect are applied to a terminal device or in a terminal device.

In a sixth aspect, the steps in the method designed in the second aspect are applied to a network device or in a network device.

In a seventh aspect, a terminal device is provided in the present application. The terminal device includes a processor, a memory, and a computer program or instructions stored in the memory. The processor is configured to execute the computer program or instructions to implement the steps in the method designed in the first aspect above.

In an eighth aspect, a network device is provided in the present application. The network device includes a processor, a memory, and a computer program or instructions stored in the memory. The processor is configured to execute the computer program or instructions to implement the steps in the method designed in the second aspect above.

In a ninth aspect, a chip is provided in the present application. The chip includes a processor and a communication interface. The processor is configured to execute the steps in the method designed in the first aspect or the second aspect.

In a tenth aspect, a chip module is provided in the present application. The chip module includes a transceiver component and a chip. The chip includes a processor, where the processor is configured to execute the steps in the method designed in the first aspect or the second aspect above.

In an eleventh aspect, a computer-readable storage medium is provided in the present application. The computer-readable storage medium stores a computer program or instructions. When the computer program or instructions is executed, the steps in the method designed in the first aspect or the second aspect are implemented. For example, the computer program or instructions is executed by a processor.

A twelfth aspect, a computer program product is provided in the present application. The computer program product includes a computer program or instructions. When the computer program or instructions is executed, the steps in the method designed in the first aspect or the second aspect are implemented. For example, the computer program or instructions is executed by a processor.

The advantageous effects brought by the technical solutions of the second to twelfth aspects can refer to the technical effects brought by the technical solutions of the first aspect, and will not be repeated herein.

BRIEF DESCRIPTION OF THE DRAWINGS

To more clearly illustrate technical solutions in embodiments of the present application, the following briefly introduces drawings required in embodiments or descriptions of the related art.

FIG. 1 is a schematic diagram of an architecture of a communication system according to embodiments of the present application.

FIG. 2 is a structural schematic diagram of a MAC CE according to embodiments of the present application.

FIG. 3 is a flow chart of a communication method according to embodiments of the present application.

FIG. 4 is a block diagram of functional units of a communication apparatus according to embodiments of the present application.

FIG. 5 is a block diagram of functional units of another communication apparatus according to embodiments of the present application.

FIG. 6 is a structural schematic diagram of a terminal device according to embodiments of the present application.

FIG. 7 is a structural schematic diagram of a network device according to embodiments of the present application.

DETAILED DESCRIPTION

It may be understood that, the terms "first", "second", and the like used in embodiments of the disclosure are used to distinguish different objects rather than describe a particular order. In addition, the terms "include", "comprise", and "have" as well as variations thereof are intended to cover non-exclusive inclusion. For example, a process, method, software, product, or device including a series of steps or units is not limited to the listed steps or units, and instead, it can optionally include other steps or units that are not listed or other steps or units inherent to the process, method, product, or device.

The term "embodiment" referred to in embodiments of the disclosure means that a particular feature, structure, or characteristic described in conjunction with the embodiment may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

The term "and/or" in embodiments of the disclosure describes an association relationship between associated objects, and indicates that there may be three relationships, for example, $A$ and/or $B$ may mean $A$ alone, both $A$ and $B$ exist, and $B$ alone. $A$ and $B$ each may be a singular from or a plural form.

The character "/" in embodiments of the disclosure can indicate that the associated objects are in an "or" relationship. In addition, the symbol "/" may represent a divisor, i.e., perform a division operation. For example, $A/B$ may represent $A$ divided by $B$.

The term "at least one (item) of" or the like in embodiments of the disclosure refers to any combination of these items, including any combination of a single item or multiple items, and refers to one or multiple, where multiple refers to two or more. For example, at least one (item) of *a*, *b*, or *c* can represent the following seven cases: *a*; *b*; *c*; *a* and *b*; *a* and *c*; *b* and *c*; *a*, *b*, and *c*. *a*, *b*, and *c* each may be an element or a set including one or more elements.

The term "equal to" in embodiments of the disclosure may be used together with "greater than", which is applicable to a technical solution used in a case of "greater than"; or may be used together with "less than", which is applicable to a technical solution used in a case of "less than". It may be noted that, when "equal to" is used together with "greater than", "equal to" is not used together with "less than"; and when "equal to" is used together with "less than", "equal to" is not used together with "greater than".

The terms "of", "corresponding/relevant", and "indicated" in embodiments of the disclosure may be used interchangeably sometimes. It may be noted that meanings expressed by the terms are consistent when differences of the terms are not emphasized.

The term "connection" in embodiments of the disclosure refers to various connection methods, such as direct connection or indirect connection, to implement communication between devices, which is not limited herein.

The terms "network" and "system" in embodiments of the disclosure may refer to the same concept, and a communication system is a communication network.

The terms "carrying" and "transmission" in embodiments of the disclosure may refer to the same concept.

The terms "discard", "not use", "ignore", and the like in embodiments of the disclosure may refer to the same concept.

The following describes related contents, concepts, meanings, technical problems, technical solutions, beneficial effects, and the like involved in embodiments of the disclosure.

I. Communication system, terminal device, and network device

1. Communication system

The technical solutions of embodiments of the disclosure may be applicable to various communication systems, for example, a General Packet Radio Service (GPRS), a Long Term Evolution (LTE) system, an Advanced LTE (LTE-A) system, a New Radio (NR) system, an evolved system of an NR system, an LTE-based access to Unlicensed Spectrum (LTE-U) system, an NR-Based Access To Unlicensed Spectrum (NR-U) system, a Non-Terrestrial Network (NTN) system, a Universal Mobile Telecommunication System (UMTS), a Wireless Local Area Network (WLAN), a Wireless Fidelity (Wi-Fi), a 6th-Generation (6G) communication system, or other communication systems.

It may be noted that, a conventional communication system generally supports a limited number (quantity) of connections and therefore is easy to implement. However, with the development of communication technology, a communication system will not only support a conventional communication system but also support, for example, Device-to-Device (D2D) communication, Machine-to-Machine (M2M) communication, Machine-Type Communication (MTC), Vehicle-to-Vehicle (V2V) communication, Vehicle to Everything (V2X) communication, Narrowband Internet of Things (NB-IoT) communication, etc. Therefore, the technical solutions of embodiments of the disclosure can also be applied to these communication systems.

In addition, the technical solutions of embodiments of the disclosure may be applied to a beamforming scenario, a Carrier Aggregation (CA) scenario, a Dual Connectivity (DC) scenario, or a Standalone (SA) deployment scenario, etc.

In embodiments of the disclosure, a spectrum used for communication between a terminal device and a network device or a band used for communication between a terminal device and a terminal device may be a licensed band or an unlicensed band, which is not limited herein. In addition, the unlicensed band may be understood as a shared band, and the licensed spectrum may be understood as an unshared band.

Since various embodiments of the disclosure are described in connection with a terminal device and a network device, the terminal device and the network device involved will be described in detail below.

2. Terminal device

The terminal device may be a device with transmitting and/or receiving functions, or may be referred to as a terminal, a User Equipment (UE), a remote UE, a relay UE, an access terminal device, a subscriber unit, a subscriber station, a mobile station, a remote station, a mobile device, a user terminal device, a smart terminal device, a wireless communication device, a user agent, or a user apparatus. It may be noted that, a relay device is a terminal device capable of providing a relay forwarding service for other terminal devices (including a remote terminal device).

For example, the terminal device may be a mobile phone, a pad, a computer with wireless transceiver functions, a Virtual Reality (VR) terminal device, an Augmented Reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, or a wireless terminal device in smart home, etc.

For another example, the terminal device may also be a cellular radio telephone, a cordless telephone, a Session Initiation Protocol (SIP) telephone, a Wireless Local Loop (WLL) station, a Personal Digital Assistant (PDA), various devices having wireless communication functions such as a handheld device, a computing device or other processing devices coupled with a wireless modem, an in-vehicle device, a wearable device, a terminal device in a next-generation communication system (such as an NR communication system, a 6G communication system), or a terminal device in a Future Evolved Public Land Mobile Network (PLMN), etc., which is not limited herein.

In some possible implementations, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In some possible implementations, the terminal device may include a device with wireless communication functions, such as a System-on-Chip (SOC), a chip, a chip module, etc. Exemplarily, the SOC may include a chip, or may also include other discrete components.

In some possible implementations, the terminal device described in the embodiments of the present application may be a chip, a chip module, an apparatus, a unit, etc., which is not limited.

3. Network device

The network device may be a device with transmitting and/or receiving functions for communicating with the terminal device.

In some possible implementations, the network device may be responsible for Radio Resource Management (RRM), Quality of Service (QoS) management, data compression and encryption, and data transmission and reception at an air interface side.

In some possible implementations, the network device may include a base station (BS) in a communication system or a device deployed on a Radio Access Network (RAN) for providing wireless communication functions, that is, the network device may include a device in RAN.

For example, the device in the RAN may include an Evolutional Node B (eNB or eNodeB) in an LTE communication system, a Next-Generation Evolved Node B (ng-eNB) in an NR communication system, a Next-Generation Node B (gNB) in an NR communication system, a Master Node (MN) in a DC architecture, a Secondary Node (SN) in a DC architecture, etc., which is not limited herein.

In some possible implementations, the network device may include a device in a Core Network (CN).

For example, the device in the CN may include an Access and Mobility Management Function (AMF), a User Plane Function (UPF), Session Management Function (SMF), etc.

In some possible implementations, the network device may also be an Access Point (AP) in a WLAN, a relay station, a communication device in a future evolved PLMN, a communication device in an NTN network, etc.

In some possible implementations, the network device may include an apparatus for providing wireless communication functions for the terminal device, such as an SOC, a chip, a chip module, etc. Exemplarily, the SOC may include a chip, or may include other discrete components.

In some possible implementations, the network device may communicate with an Internet Protocol (IP) network, for example, the Internet, a private IP network, or other data networks.

In some possible implementations, the network device may include an independent node to implement functions of the base station, or the network device may include two or more independent nodes to implement functions of the base station. For example, the network device includes a Centralized Unit (CU) and a Distributed Unit (DU), such as a gNB-CU and a gNB-DU. Further, in some other embodiments of the disclosure, the network device may further include an Active Antenna Unit (AAU). The CU can implement some functions of the network device, and the DU can implement some other functions of the network device. For example, the CU is responsible for processing non-real-time protocols and services, and implements functions of a Radio Resource Control (RRC) layer, functions of a Service Data Adaptation Protocol (SDAP) layer, and functions of a Packet Data Convergence Protocol (PDCP) layer. The DU is responsible for processing physical (PHY) layer protocols and real-time services, and implements functions of a Radio Link Control (RLC) layer, functions of a Medium Access Control (MAC) layer, and functions of a PHY layer. In addition, the AAU can implement some PHY layer processing functions, Radio Frequency (RF) processing functions, and active-antenna-related functions. Since RRC layer information will eventually become PHY layer information, or be transformed from PHY layer information, in such network deployment, it may be considered that higher-layer signaling, such as RRC signaling, is generated by the CU and transmitted by the DU, or transmitted by the DU and the AAU. It can be considered that, the network device may include at least one of the CU, the DU, or the AAU. In addition, the CU may be categorized into a device in a RAN, or may be categorized into a device in a CN, which is not limited herein.

In some possible implementations, the network device may be any one of multiple stations that perform Coherent Joint Transmission (CJT) with the terminal device, another station other than the multiple stations, or another network device that performs network communication with the terminal device, which is not limited herein. Multi-station coherent joint transmission may be joint coherent transmission of multiple stations, transmission of different data belonging to the same Physical Downlink Shared Channel (PDSCH) from different stations to the terminal device, or transmission by multiple stations virtualized into one station. Names with the same meaning specified in other standards are also applicable to the disclosure. That is, the names of these parameters are not limited in the disclosure. The station in multi-station coherent joint transmission may be a Remote Radio Head (RRH), a Transmission and Reception Point (TRP), a network device, etc., which is not limited herein.

In some possible implementations, the network device may be any one of multiple stations that perform incoherent joint transmission with the terminal device, another station other than the multiple stations, or another network device that performs network communication with the terminal device, which is not limited herein. Multi-station incoherent joint transmission may be joint incoherent transmission of multiple stations, transmission of different data belonging to the same PDSCH from different stations to the terminal device, or transmission of different data belonging to the same PDSCH from different stations to the terminal device. Names with the same meaning specified in other standards are also applicable to the disclosure. That is, the names of these parameters are not limited in the disclosure. The station in multi-station incoherent joint transmission may be a RRH, a TRP, a network device, etc., which is not limited herein.

In some possible implementations, the network device may be mobile. For example, the network device may be a mobile device. Optionally, the network device may be a satellite or a balloon base station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station deployed on land or water.

In some possible implementations, the network device may provide services for a cell. The terminal device in the cell can communicate with the network device through transmission resources, such as spectrum resources. The cell may be a macro cell, a small cell, a metro cell, a micro cell, a pico cell, a femto cell, etc.

In some possible implementations, the network device described in the embodiments of the present application may be a chip, a chip module, an apparatus, a unit, etc., which is not limited.

4. Exemplary description

The communication system in embodiments of the disclosure is exemplified below.

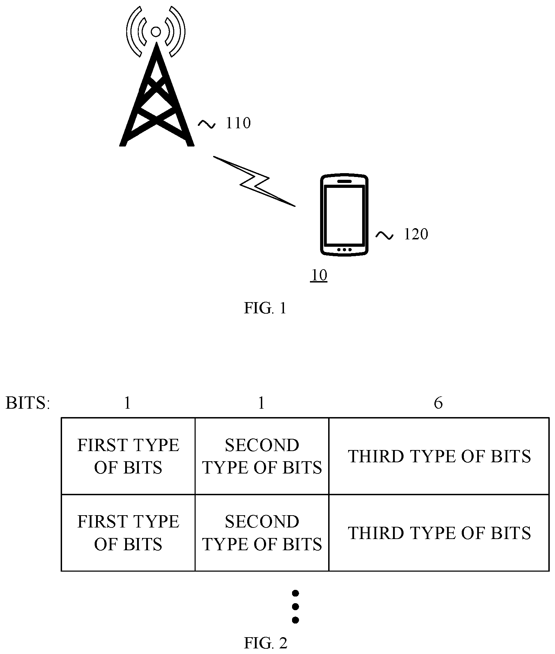

Exemplarily, referring to FIG. 1, a network architecture of a communication system in embodiments of the disclosure is illustrated. As illustrated in FIG. 1, a communication system 10 may include a network device 110 and a terminal device 120.

FIG. 1 only illustrates an example of the network architecture of the communication system, and does not constitute a limitation on the network architecture of the communication system in embodiments of the disclosure. For example, the communication system 10 may further include a server or other devices. For another example, the communication system 10 may include multiple network devices and/or multiple terminal devices.

II. Communication process under combination of AI technology and wireless communication technology

1. Description

With the continuous development of the AI technology and the continuous evolution of the wireless communication system, 3GPP is currently discussing the combination of the AI technology and the wireless communication technology. Under the combination of the AI technology and the wireless communication technology, related processing is performed on air interface transmission by using the AI model, to improve air interface performance, such as improving the reliability of air interface transmission and reducing air interface overhead.

It should be noted that the AI model in embodiments of the present application can also be described using other terms, which is not limited.

Due to the diversity and variability of actual communication scenarios and other factors, a state of the AI model may also be diverse and changeable. Therefore, it is necessary to dynamically decide the adapted state of the AI model based on the actual processing situation, such as whether the AI model needs to be activated, needs to be deactivated, is available, is unavailable, needs to be updated, needs to be switched, needs to be recommended, or needs to be not recommended.

For example, when a terminal device or network device needs to use the AI model to perform related processing on air interface transmission, it can decide that the AI model is activated or available. In this case, the AI model is in an activated state or an available state. In this way, the AI model is used to improve processing efficiency or processing accuracy, and improve communication efficiency and communication reliability.

For another example, when the terminal device or network device does not need to use the AI model to perform related processing on air interface transmission, it can decide that the AI model is deactivated or unavailable. In this case, the AI model is in a deactivated state or an unavailable state. In this way, the communication failure caused by the use of the AI model in some scenarios where the AI model cannot be used or does not need to be used can be avoided. For example, in a scenario where the sender supports the AI model but the receiver does not support the AI model, if the sender uses the AI model to compress information, the receiver will be unable to decompress the information. Alternatively, there is no need to use the AI model to perform some processing on air interface transmission, etc.

For another example, when the terminal device or network device needs to update the model parameters/model architectures of the AI model, it can decide that the AI model is updating. In this case, the AI model is in an updating state. In this way, the updated AI model is used to improve processing efficiency or processing accuracy, thereby improving communication efficiency and communication reliability.

For another example, when the terminal device or network device needs to switch the original AI model to another AI model, it can decide that the AI model is switching. In this case, the AI model is in a switching state. In this way, the switched AI model is used to improve processing efficiency or processing accuracy, thereby improving communication efficiency and communication reliability.

For another example, when the terminal device needs to recommend or not recommend the AI model to the network device, it can decide that the AI model is recommended or not recommended. In this case, the AI model is in a recommended state or a not recommended state. In this way, the network device can make further decisions according to the AI model recommended or not recommended by the terminal device.

In conclusion, in embodiments of the present application, the adapted state of the AI model can be dynamically decided according to the actual processing situation, to improve processing efficiency or processing accuracy, avoid communication failures, etc.

To decide the state of the AI model, the first information is introduced in embodiments of the present application, where the first information may include request information and/or notification information.

For some terminal devices, since the terminal device may need to request the network device to decide the state of the AI model, in embodiments of the present application, the decision on the state of the AI model between the terminal device and the network device can be achieved through the request information.

For example, some terminal devices have limited capabilities and cannot support decision on the state of the AI model. In this way, the terminal device with limited capability can achieve the decision on the state of the AI model between the terminal device and the network device by sending the request information.

For some terminal devices, since the terminal device may have decided the state of the AI model itself, to ensure that the network can also be synchronized to know the decision result of the terminal device on the AI model and to avoid that the AI model is not synchronized between the terminal device and the network, in embodiments of the present application, the network can be informed of the decision result information of the state of the AI model through the notification information. As such, the decision result of the AI model can be synchronized between the terminal device and the network device and the consistency of the state of the AI model can be ensured.

For example, some terminal devices have strong capabilities and can support decision on the state of the AI model. In this way, the terminal device with strong capability can synchronize the decision result of the AI model between the terminal device and the network device by sending the notification information, ensuring the consistency of the state of the AI model.

2. Detailed description

The technical solutions, advantageous effects, concepts, etc. involved in the embodiments of the present application are described in detail below.

1) AI Model

① Description

It should be noted that AI may include ML, DL, etc., and the AI model may have certain model parameters and model architectures, etc., and the AI model may include various linear and nonlinear network models, such as linear regression, vector machines, CNN, DNN, etc.

② Role of AI model

It should be noted that under the combination of the AI technology and the wireless communication technology, in embodiments of the present application, related processing can be performed on air interface transmission by using the AI model, to improve the air interface performance, such as improving the reliability of air interface transmission, reducing air interface overhead, etc. Therefore, the AI model can be used for the processing of air interface transmission.

Specifically, the processing of air interface transmission may include at least one of: Channel State Information (CSI) compression, CSI recovery, CSI prediction, beam prediction, and positioning of a location of a terminal device, which are described in detail below.

♦ CSI compression, CSI recovery

It should be noted that the terminal device can perform channel measurement/interference measurement according to the transmission opportunities of one or more CSI Reference Signals (CSI-RS), to obtain the channel information/CSI parameter, and input the channel information/CSI parameter into the AI module for compression, to obtain compressed information, thereby realizing CSI compression through the AI model.

Accordingly, the network device receives the compressed information from the terminal device and inputs the compressed information into the AI module for decompression, to obtain the channel information/CSI parameter, thereby realizing CSI recovery through the AI model.

Specifically, the CSI parameter may include at least one of: CSI-RS Resource Indicator (CRI), SS/PBCH Block Resource Indicator (SSBRI), Rank Indicator (RI), Precoding Matrix Indicator (PMI), Channel Quality Indicator (CQI), Layer Indicator (LI), or the like.

Specifically, the channel information may include at least one of: the channel matrix $H$, the equivalent channel matrix, the precoding matrix $W$ (the precoding matrix $W$ may be derived from the channel matrix $H$), the right-singular vector $V$ of the channel matrix $H$, the eigen vector $v_i$ of the square matrix $H^TH$ (an eigen vector of a matrix obtained by multiplying the conjugate transpose $H^T$ of the channel matrix by the channel matrix $H$), at least one vector associated with the channel matrix $H$ (for example, at least one vector of the channel matrix $H$ under certain deformation, etc.), time-domain information of a channel, channel information of the delay-Doppler domain, CRI, SSBRI, RI, PMI, CQI, LI, or the like.

♦ SI prediction

It should be noted that the terminal device can perform channel measurement/interference measurement according to one or more CSI-RS transmission opportunities, to obtain the channel information/CSI parameter, and then input the channel information/CSI parameter into the AI module for prediction, to obtain predicted CSI information, thereby realizing CSI prediction through the AI model.

Specifically, the predicted information may include channel information/CSI parameter corresponding to one or more time/time points/time units/time domain locations after the one or more CSI-RS transmission opportunities.

♦ Beam prediction

In some possible implementations, the terminal device can detect beam information such as beam distribution/beam signal strength at the current time point/current time, and then input the beam information into the AI model for prediction, to obtain predicted beam information, thereby realizing beam prediction through the AI model.

Specifically, the predicted beam information may include beam information such as beam distribution/beam signal strength at a time point after the current time point/current time, and may also include beam information such as beam distribution/beam signal strength of an unmeasured beam at the current time point/current time.

In some possible implementations, the terminal device can input a part of beam information into the AI model for prediction, to obtain all beam information or beam information of the unmeasured beam, thereby realizing beam prediction through the AI model.

In some possible implementations, the terminal device can measure one or more CSI-RS/SSB transmission opportunities to obtain beam information, and then input the beam information into the AI module for prediction, to obtain predicted beam information, thereby realizing beam prediction through the AI model.

Specifically, the predicted information may include beam information corresponding to one or more time/time points/time units/time domain locations after the one or more CSI-RS/SSB transmission opportunities.

♦ Positioning of location of terminal device

It should be noted that the terminal device can detect information such as channel quality, channel impulse response, delay corresponding to channel, communication angle/arrival angle of a signal reaching the terminal device, and then input the information into the AI model for calculation, to obtain the location of the terminal device or determination information of Line of Sight (LOS), etc., to realize positioning of the location of the terminal device through the AI model.

③ State of AI Model

It should be noted that the state of the AI model may be diverse and changeable due to factors such as the diversity and variability of actual communication scenarios. The state of the AI model may include at least one of: an activated state, a deactivated state, an available state, an unavailable state, an updating state, a switching state, a recommended state, or a not recommended state. The following are explained separately.

♦ Activated state, available state

It should be noted that when the terminal device or network device needs to use the AI model to perform related processing on air interface transmission, it can decide that the AI model is activated or available. In this case, the AI model is in the activated state or the available state. In this way, the terminal device or network device can use the AI model.

♦ Deactivated state, unavailable state

It should be noted that, when the terminal device or network device does not need to use the AI model to perform related processing on air interface transmission, it can decide that the AI model is deactivated or unavailable. In this case, the AI model is in the deactivated state or the unavailable state. In this way, the terminal device or network device may not use the AI model, to avoid the communication failure caused by the use of the AI model in some scenarios where the AI model cannot be used or does not need to be used.

For example, for a scenario where the AI model cannot be used, in the case that the terminal device supports the AI model but the network device does not support the AI model, that is, the terminal device and the network device have different support capabilities for the AI model, if the terminal device uses the AI model to compress the CSI, to obtain compressed information and then reports the compressed information to the network device, since the network device does not support the AI model, the network device cannot decompress the compressed information to recover the CSI, resulting in a failure in CSI reporting.

For example, for a scenario where the AI model does not need to be used, there is no need to use the AI model to perform some processing on air interface transmission, such as signal modulation, signal coding, etc.

♦ Updating state

It should be noted that in the case that the terminal device or network device needs to update the model parameters/model architectures of the AI model, the terminal device or network device can decide that the AI model is updating. In this case, the AI model is in the updating state.

For example, when the terminal device determines that the result output from the AI model is poor/-inappropriate/poor processing result, or when the terminal device determines that the AI model has a high processing delay, etc., the terminal device needs to update the model parameters/model architectures of the AI model. In this way, the updated AI model is used to improve processing efficiency or processing accuracy, and improve communication efficiency and communication reliability.

♦ Switching state

It should be noted that when the terminal device or network device needs to switch the original AI model to another AI model, the terminal device or network device can decide that the AI model is switching. In this case, the AI model is in the switching state.

For example, when the terminal device determines that the result output from the AI model is poor/-inappropriate/poor processing result, or when the terminal device determines that the AI model has a high processing delay, etc., the terminal device needs to switch the original AI model. In this way, the switched AI model is used to improve processing efficiency or processing accuracy, and improve communication efficiency and communication reliability.

For another example, when the AI model used by the terminal device and/or the network device need to be changed, that is, the AI model is not synchronized between the terminal device and the network device, to ensure the consistency of processing, the AI model needs to be switched, so that the terminal device and the network device are synchronized to the same AI model, to avoid communication failures due to asynchrony.

♦ Recommended state, not recommended state

It should be noted that the terminal device may recommend or not recommend the AI model expected by the AI model itself to the network device. In this case, the AI model is in the recommended state or the not recommended state. The network device can make further decisions according to the AI model recommended or not recommended by the terminal device.

In addition, when the terminal device decides the state of the AI model, the recommended state or not recommended state of the AI model can also be combined with other types of states. For example, the AI model is decided to be: not recommended to activate, recommended to activate, not recommended to deactivate, recommended to deactivate, not recommended to be available, recommended to be available, not recommended to be unavailable, recommended to be unavailable, not recommended to update, recommended to update, not recommended to switch, recommended to switch, etc.

2) First Information

① Description

It should be noted that, with respect to the decision on the state of the AI model, from the perspective of the terminal device, in embodiments of the present application, the first information is introduced, where the first information may include request information and/or notification information.

Certainly, the first information, the request information, and the notification information may also be described using other terms, which is not limited herein.

02 Request information

In embodiments of the present application, the request information can be used to request the network to decide the state of the AI model.

It should be noted that for some terminal devices, since the terminal device may need to request the network device to decide the state of the AI model, in embodiments of the present application, the decision on the state of the AI model between the terminal device and the network device can be achieved through the request information.

For example, some terminal devices have limited capabilities and cannot support decision on the state of the AI model. In this way, the terminal device with limited capability can achieve the decision on the state of the AI model between the terminal device and the network device by sending the request information.

In addition, the "network" described in the embodiments of the present application may refer to the "network device", which is not limited herein.

③ Notification information

In embodiments of the present application, the notification information can be used to notify the network of the decision result information of the state of the AI model.

It should be noted that for some terminal devices, since the terminal device may have decided the state of the AI model itself, to ensure that the network can also be synchronized to know the decision result of the terminal device on the AI model and to avoid that the AI model is not synchronized between the terminal device and the network, in embodiments of the present application, the network can be informed of the decision result information of the state of the AI model through the notification information. As such, the decision result of the AI model can be synchronized between the terminal device and the network device and the consistency of the state of the AI model can be ensured.

For example, some terminal devices have strong capabilities and can support decision on the state of the AI model. In this way, the terminal device with strong capability can synchronize the decision result of the AI model between the terminal device and the network device by sending the notification information, ensuring the consistency of the state of the AI model.

④ Decision result information

Combined with the content in the above "③ State of AI model", the decision result information may include at least one of: model identification information, model function information, or model state decision information. The following will be described in detail.

♦ Model identification information

In embodiments of the present application, model identification information can be used to identify the AI model.

For example, the model identification information includes a model identifier (ID) or a model index (index).

In this way, the model identification information can be used to distinguish which AI model is being decided.

♦ Model function information

In embodiments of the present application, the model function information can indicate a model function of an identified AI model or indicate a model function of the AI model.

It should be noted that the identified AI model can be understood as the AI model identified by the above "model identification information".

In addition, the AI model indicated by the model function information may be or may not be the AI model identified by the above "model identification information", which is not limited herein.

Since different model functions may be used to perform different processing on air interface transmission, for example, the model function may be used for CSI compression, CSI prediction, beam prediction, positioning of the location of the terminal device, etc., the model function of the identified AI model or the AI model can be obtained through the model function information.

♦ Model state decision information

In embodiments of the present application, the model state decision information can indicate a state decision result of the identified AI model or indicate a state decision result of the AI model.

It should be noted that the identified AI model can be understood as the AI model identified by the above "model identification information".

In addition, the AI model indicated by the model state decision information may be or may not be the AI model identified by the above "model identification information", which is not limited herein.

Combined with the content in the above "③ State of AI model", the state decision result may include at least one of: "not recommended to activate", "recommended to activate", "activated", "not recommended to deactivate", "recommended to deactivate", "deactivated", "not recommended to be available", "recommended to be available", "available", "not recommended to be unavailable", "recommended to be unavailable", "unavailable", "not recommended to update", "recommended to update", "updating", "not recommended to switch", "recommended to switch", or "switching".

In this way, the state decision result of the identified AI model can be obtained through the model state decision information.

⑤ Condition for sending first information

Regarding when to send the first information, combined with the content in the above "③ State of AI model", the condition for sending the first information may include at least one of the following.

The terminal device needs to use the AI model to perform related processing on air interface transmission. The terminal device does not need to use the AI model to perform related processing on air interface transmission. The terminal device and the network device have different support capabilities for the AI model. Air interface transmission no longer needs to be processed by using the AI model. The terminal device determines that the result output from the AI model is poor/inappropriate/poor processing result. The terminal device determines that the AI model has a high processing delay. The AI model is not synchronized between the terminal device and the network device. The terminal device needs to recommend or not recommend the AI model to the network device. The terminal device has insufficient processing capabilities, etc.

As can be seen, in embodiments of the present application, the first information can be sent for different scenarios, to decide the state of the AI model in different scenarios.

⑥ How to carry first information

In embodiments of the present application, the first information may be carried by a Medium Access Control (MAC) Control Element (CE).

In this way, the first information is carried by the MAC CE, to achieve decision on the state of the AI model.

⑦ How to carry first information by MAC CE

Combined with the content in the above "④ decision result information", to implement carrying the first information by MAC CE, MAC CE may include at least one byte, each byte has 8 bits, and a type of bits in the at least one byte may include at least one of: a first type of bits, a second type of bits, a third type of bits, a fourth type of bits, or a fifth type of bits. The following are respectively described.

♦ First type of bits

In embodiments of the present application, the first type of bits can be used to indicate whether a next byte of a byte where the first type of bits are located exists.

In this way, the first type of bits can be used to determine existence of the next byte.

Specifically, the number of the first type of bits may be one or more.

For example, if the number of the first type of bits is one, the first type of bits is regarded as one bit in the byte. If the value of the one bit is "1", it means that the next byte of the byte where the bit is located exists; if the value of the one bit is "0", it means that the next byte of the byte where the bit is located does not exist. On the contrary, if the value of the one bit is "1", it means that the next byte of the byte where the bit is located does not exist; if the value of the one bit is "0", it means that the next byte of the byte where the bit is located exists.

Specifically, the first type of bits can be located at the first one or more bits in the byte, at the last one or more bits in the byte, or at any one or more bits in the byte. In this way, the location(s) of the second type of bits can be flexibly set according to actual communication conditions.

For example, if the number of the first type of bits is one and the first type of bits is located at the first bit in the byte, the first type of bits is the first bit in the byte. In this way, when decoding the byte in the MAC CE, the first type of bits can be decoded first, to first know whether there is a next byte.

♦ Second type of bits

In embodiments of the present application, the second type of bits can be used to identify the AI model.

It should be noted that the second type of bits can characterize/represent the above "model identification information". In this way, the second type of bits can be used to distinguish which AI model is being decided.

Specifically, the number of the second type of bits may be multiple. In this case, the second type of bits are regarded as multiple bits in the byte, and the multiple bits are used to identify the AI model being decided.

Specifically, the second type of bits can be located at the first multiple bits in the byte, at the last multiple bits in the byte, at any multiple bits in the byte, distributed in a single byte, or distributed in multiple bytes. In this way, the locations of the second type of bits can be flexibly set according to actual communication conditions.

For example, if the locations of the second type of bits are distributed in two bytes, the locations of the second type of bits can be distributed in two consecutive bytes. This is because the bits used to identify the AI model in the first byte are limited, so some bits in the second byte are needed to jointly identify the AI model.

♦ Third type of bits

In embodiments of the present application, the third type of bits can be used to indicate the model function of the identified AI model, or can indicate the model function of the AI model.

It should be noted that the identified AI model may refer to the AI model identified by the second type of bits.

In addition, the AI model indicated by the third type of bits may be or may not be the AI model identified by the above "second type of bits", which is not limited herein.

Specifically, the third type of bits can characterize/represent the above "model function information". In this way, the model function of the identified AI model can be known through the third type of bits.

Specifically, the number of the third type of bits can be multiple. In this case, the third type of bits are regarded as multiple bits in the byte, and the multiple bits are used to obtain the model function of the AI model.

For example, if the number of the third type of bits is 3, the third type of bits are regarded as three bits in the byte. If the values of the three bits are "000", it indicates that the model function of the AI model is "CSI compression"; if the values of the three bits are "001", it indicates that the model function of the AI model is "CSI recovery"; if the values of the three bits are "010", it indicates that the model function of the AI model is "CSI prediction"; if the values of the three bits are "011", it indicates that the model function of the AI model is "beam prediction"; if the values of the three bits are "100", it indicates that the model function of the AI model is "positioning of location of terminal device"; and so on.

Specifically, the third type of bits can be located at the first multiple bits in the byte, at the last multiple bits in the byte, at any multiple bits in the byte, distributed in a single byte, or distributed in multiple bytes. In this way, the locations of the third type of bits can be flexibly set according to actual communication conditions.

♦ Fourth type of bits

In embodiments of the present application, the fourth type of bits can be used to indicate the state decision result of the identified AI model or can indicate the state decision result of the AI model.

The state decision result may include at least one of: "not recommended to activate", "recommended to activate", "activated", "not recommended to deactivate", "recommended to deactivate", "deactivated", "not recommended to be available", "recommended to be available", "available", "not recommended to be unavailable", "recommended to be unavailable", "unavailable", "not recommended to update", "recommended to update", "updating", "not recommended to switch", "recommended to switch", or "switching".

It should be noted that the identified AI model may refer to the AI model identified by the second type of bits.

In addition, the AI model indicated by the fourth type of bits may be or may not be the AI model identified by the above "second type of bits", which is not limited herein.

Specifically, the fourth type of bits can characterize/represent the above "model state decision information". In this way, the fourth type of bits can be used to know the state decision result of the identified AI model.

Specifically, the number of the fourth type of bits can be multiple. In this case, the fourth type of bits are regarded as multiple bits in the byte, and the multiple bits are used to obtain the state decision result of the AI model.

For example, if the number of the fourth type of bits is 3, the fourth type of bits are regarded as three bits in the byte. If the values of the three bits are "000", it indicates that the state decision result of the AI model is "recommended to activate" or "recommended to be available"; if the values of the three bits are "001", it indicates that the state decision result of the AI model is "recommended to deactivate" or "recommended to be unavailable"; if the values of the three bits are "010", it indicates that the state decision result of the AI model is "activated" or "available"; if the values of the three bits are "011", it indicates that the state decision result of the AI model is "deactivated" or "unavailable"; if the values of the three bits are "100", it indicates that the state decision result of the AI model is "recommended to update"; if the values of the three bits are "101", it indicates that the state decision result of the AI model is "updating"; if the values of the three bits are "110", it indicates that the state decision result of the AI model is "recommended to switch"; if the values of the three bits are "111", it indicates that the state decision result of the AI model is "switching"; and so on.

Specifically, the fourth type of bits can be located at the first multiple bits in the byte, at the last multiple bits in the byte, at any multiple bits in the byte, distributed in a single byte, or distributed in multiple bytes. In this way, the locations of the fourth type of bits can be flexibly set according to actual communication conditions.

Specifically, the number of the fourth type of bits may be 1. In this case, the fourth type of bits is regarded as one bit in the byte, and the state decision result of the AI model is obtained by using the one bit.

For example, if the number of the fourth type of bits is 1, the fourth type of bits is regarded as one bit in the byte. If the value of the one bit is "1", it indicates that the state decision result of the AI model is "recommended to activate" or "recommended to be available"; if the value of the one bit is "0", it indicates that the state decision result of the AI model is "not recommended to activate" or "not recommended to be available".

Specifically, the fourth type of bits can be located at the first bit in the byte, at the last bit in the byte, or at any bit in the byte. In this way, the location of the fourth type of bits can be flexibly set according to actual communication conditions.

♦ Fifth type of bits

In embodiments of the present application, the fifth type of bits can be used to request the network to decide the identified AI model or to request the network to decide the state of the identified AI model, or can be used to request the network to decide the AI model or to request the network to decide the state of the AI model.

It should be noted that the identified AI model may refer to the AI model identified by the second type of bits.

In addition, the AI model requested to be decided through the fifth type of bits may be or may not be the AI model identified by the above "second type of bits", which is not limited herein.

Specifically, the number of the fifth type of bits may be one or more. In this case, the fifth type of bits are regarded as one or more bits in the byte.

It should be noted that, for locations and orders of the various types of bits, in the embodiments of the present application, the various types of bits may have certain locations and orders.

For example, in the byte of the MAC CE, the first type of bits, the second type of bits, and the third type of bits are arranged in order, as illustrated in FIG. 2.

For another example, in the byte of the MAC CE, first type of bits, second type of bits, third type of bits, and fourth type of bits are arranged in order.

For another example, in the byte of the MAC CE, the first type of bits and the fifth type of bits are arranged in order.

### 3) Second information

It should be noted that the above "first information" is explained from the perspective of the terminal device, and certainly it can also be explained from the perspective of the network device. In this regard, the second information is introduced in embodiments of the present application, where the second information can notify the terminal device of the decision result information of the state of the AI model. In this way, through the second information, it is helpful to ensure that the terminal device can also synchronously know the decision result of the network device on the AI model, and avoid the situation where the AI model is not synchronized between the terminal device and the network.

In addition, the second information may be or may not be a response to the above "request information", which is not limited herein.

In some possible implementations, the second information may be carried by downlink signaling, where the downlink signaling may include one of: Downlink Control Information (DCI), RRC signaling, or MAC CE.

### 4) Resource for carrying first information

It should be noted that the resource for carrying the first information can be understood as a resource required for transmitting the first information, where the resource can be a Physical Uplink Shared Channel (PUSCH) resource.

### ① First scheduling request, first PUCCH

It should be noted that before sending the first information, the terminal device may need to send a Scheduling Request (SR) to the network device. The scheduling request can be used to request scheduling or allocation of the resource for carrying the first information, and the scheduling request can be carried by a Physical Uplink Control Channel (PUCCH).

For ease of distinction and description, in embodiments of the present application, the scheduling request may be referred to as the "first scheduling request", and the PUCCH carrying the first scheduling request may be referred to as the "first PUCCH".

That is, the first scheduling request can be used to request scheduling or allocation of the resource for carrying the first information.

Accordingly, after receiving the first scheduling request, the network device will schedule or allocate the resource for carrying the first information to the terminal device.

### ② First PUCCH overlaps or does not overlap in time domain with uplink channel or uplink reference signal

In embodiments of the present application, the first PUCCH may or may not overlap in the time domain with the uplink channel or the uplink reference signal, which may affect the use of the first PUCCH.

For example, when there is no overlap, the terminal device can directly use the first PUCCH to transmit the first information.

For another example, when there is overlap, it is necessary to further determine whether the first PUCCH is discarded. If the first PUCCH is discarded, the terminal device cannot use the first PUCCH to transmit the first information, and it may be necessary to reschedule or reallocate the resource for carrying the first information, or carry the first scheduling request through other channels; if the first PUCCH is not discarded, the terminal device can directly use the first PUCCH to transmit the first information.

The following are detailed explanations.

#### a. Meaning

In embodiments of the present application, the first PUCCH overlaps in the time domain with the uplink channel or the uplink reference signal, which can be understood as the time domain resource(s) of the first PUCCH and the time domain resource(s) of the uplink channel or the uplink reference signal may overlap/be the same/conflict, etc. The time domain resource may include one of a sub-frame, a time slot, a symbol, a mini time slot, etc.

For example, the symbol of the first PUCCH overlaps/is the same/conflicts with the symbol of the uplink channel or the uplink reference signal.

Specifically, they may completely overlap or partially overlap (overlap in part), may be completely the same or partially the same (same in part), or may completely conflict or partially conflict (conflict in part), which is not limited herein.

#### b. Uplink channel

It should be noted that the uplink channel can be understood as an uplink channel except the first PUCCH.

Specifically, the uplink channel may include at least one of: a PUCCH carrying CSI and/or Hybrid Automatic Repeat reQuest-Acknowledgement (HARQ-ACK) (for the convenience of distinction and description, the PUCCH may be referred to as a "second PUCCH'), a PUCCH (for the convenience of distinction and description, the PUCCH may be referred to as a "third PUCCH") carrying a scheduling request (for the convenience of distinction and description, the scheduling request is referred to as a "second scheduling request") for requesting scheduling or allocation of a resource(s) other than the resource for carrying the first information, or Physical Random Access Channel (PRACH).

c. PUCCH-BFR

It should be noted that, in the above "b. Uplink channel", the resource other than the resource for carrying the first information may include a PUSCH resource for carrying Beam Failure Recovery (BFR) information of the Secondary Cell (Scell), and/or a resource other than the resource for carrying the first information and the PUSCH resource for carrying the BFR information of the Scell.

For the convenience of distinction and description, in embodiments of the present application, the PUCCH carrying the scheduling request for requesting scheduling or allocation of the PUSCH resource for carrying the BFR information of the Scell may be referred to as "PUCCH-BFR". In this regard, the third PUCCH may include the PUCCH-BFR.

d. Uplink reference signal

It should be noted that the uplink reference signal may include at least one of: a Sounding Reference Signal (SRS), a Demodulation Reference Signal (DM-RS), or a Phase Tracking Reference Signal (PT-RS).

③ First PUCCH is or is not in same time unit with uplink channel or uplink reference signal

In embodiments of the present application, the first PUCCH and the uplink channel or the uplink reference signal may be or may not be in the same time unit, which may affect the use of the first PUCCH.

For example, when they are not in the same time unit, the terminal device can directly use the first PUCCH to transmit the first information.

For another example, when they are in the same time unit, it is necessary to further determine whether the first PUCCH is discarded. If the first PUCCH is discarded, the terminal device cannot use the first PUCCH to transmit the first information, and it may be necessary to reschedule or reallocate the resource for carrying the first information, or carry the first scheduling request through other channels; if the first PUCCH is not discarded, the terminal device can directly use the first PUCCH to transmit the first information.

It should be noted that the time unit can be understood as a communication granularity in the time domain. For example, the time unit can include one of a sub-frame, a time slot, a symbol, a mini-time slot, and the like.

In addition, when the first PUCCH and the uplink channel or the uplink reference signal are in the same time unit, the first PUCCH may overlap or may not overlap with the uplink channel or the uplink reference signal.

For example, when the time unit includes a time slot, the first PUCCH and the uplink channel or the uplink reference signal are in the same time slot, but the first PUCCH and the uplink channel or the uplink reference signal do not overlap in the time slot.

④ First PUCCH has same priority or different priority as uplink channel or uplink reference signal

In embodiments of the present application, the first PUCCH and the uplink channel or the uplink reference signal may have the same priority or different priorities, which may affect the use of the first PUCCH. The uplink channel and the uplink reference signal are described in detail in the above "② First PUCCH overlaps or does not overlap in time domain with uplink channel or uplink reference signal", which will not be repeated herein.

It should be noted that the priority type (type of the priority) may include priority 0 and priority 1, and the priorities may be distinguished by priority index.

Specifically, priority 0 may indicate/be associated with/correspond to an Enhanced Mobile Broadband (eMBB) service.

Specifically, priority 1 may indicate/be associated with/correspond to an Ultra-Reliable Low-Latency Communication (URLLC) service.

In this regard, the first PUCCH has the same priority as the uplink channel or the uplink reference signal, which can be understood as the first PUCCH has the same priority type or the same priority index as the uplink channel or the uplink reference signal.

For example, the first PUCCH has priority 0, and the uplink channel or uplink reference signal also has priority 0. Alternatively, the first PUCCH has priority 1, and the uplink channel or uplink reference signal also has priority 1.

Accordingly, the first PUCCH and the uplink channel or the uplink reference signal have different priorities, which can be understood as the first PUCCH and the uplink channel or the uplink reference signal have different priority types or different priority indexes.

For example, the first PUCCH has priority 0, and the uplink channel or uplink reference signal has priority 1. Alternatively, the first PUCCH has priority 1, and the uplink channel or uplink reference signal has priority 0.

⑤ PUCCH format of each of first PUCCH, second PUCCH, and third PUCCH

In embodiments of the present application, the PUCCH format of each of the first PUCCH, the second PUCCH, and the third PUCCH can be one of: PUCCH format 0, PUCCH format 1, PUCCH format 2, PUCCH format 3, and PUCCH format 4, which is not limited.

In this way, the first PUCCH, the second PUCCH, and the third PUCCH of embodiments of the present application may have various types of PUCCH formats to adapt to various scenario requirements.

⑥ Scheduling request type of each of first scheduling request and second scheduling request

In embodiments of the present application, the scheduling request type of each of the first scheduling request and the second scheduling request may be one of: positive Scheduling Request (positive SR) and negative Scheduling Request (negative SR).

In this way, the first scheduling request and the second scheduling request in embodiments of the present application may have various types of scheduling requests, to adapt to various scenario requirements.

⑦ Discarding of first PUCCH, uplink channel, and uplink reference signal

a. Description

It should be noted that in embodiments of the present application, the discarding of the first PUCCH, the uplink channel, and the uplink reference signal can be determined based on whether the first PUCCH overlaps with the uplink channel or the uplink reference signal in the time domain or is in the same time unit with the uplink channel or the uplink reference signal, and the relationship between the priority of the first PUCCH and the priority of the uplink channel or the uplink reference signal.

Here, discarding can be understood as not using, ignoring, etc. For example, the first PUCCH is discarded, which can be understood as not using the first PUCCH for data/signal/information transmission.

The following is a detailed description of various scenarios, and these scenarios may be mutually exclusive implementations, may be mutually related implementations, or may be combined to form new scenarios, which is not limited herein.

Scenario I

In "Scenario I", discarding of the channel or the signal in the case that the first PUCCH and the channel or the signal overlap in the time domain or are in the same time unit and have different priorities is discussed in embodiments of the present application.

In some possible implementations, if the first PUCCH overlaps with the uplink channel or the uplink reference signal in the time domain or is in the same time unit with the uplink channel or the uplink reference signal, and the priority of the first PUCCH is higher than the priority of the uplink channel or the uplink reference signal, the uplink channel or the uplink reference signal is discarded.

In some possible implementations, if the first PUCCH overlaps with the uplink channel or the uplink reference signal in the time domain or is in the same time unit with the uplink channel or the uplink reference signal, and the priority of the first PUCCH is lower than the priority of the uplink channel or the uplink reference signal, the first PUCCH is discarded.

It is understandable that when the first PUCCH and the channel or the signal overlap in the time domain or are in the same time unit, the channel or the signal with lower priority will be discarded. In this way, it is conducive to ensuring the use of the channel or the signal with higher priority.

In addition, there may be two cases of discarding of the channel or the signal.

♦ One case is that: since they may partially overlap (overlap in part), although the channel or the signal is discarded and the signal or channel has a low priority, the overlapping time domain resource in the channel or the signal may be discarded while the non-overlapping time domain resource can still be used.
♦ The other case is that: although they may partially overlap (overlap in part), the discarded channel or the signal has a low priority, so both the overlapping time domain resource and the non-overlapping time domain resource in the channel or the signal need to be discarded.

Scenario II

In "Scenario II", discarding of the channel or the signal in the case that the first PUCCH and the channel or the signal overlap in the time domain or are in the same time unit and have the same priority is discussed in embodiments of the present application.

Example 1

Taking the first PUCCH and the second PUCCH as an example, if the first PUCCH overlaps in the time domain or is in the same time unit with the second PUCCH, and the first PUCCH and the second PUCCH have the same priority, the first PUCCH is discarded or the second PUCCH is discarded.

It should be noted that when the first PUCCH overlaps in the time domain or is in the same time unit with the second PUCCH, and the first PUCCH and the second PUCCH have the same priority, the terminal device can decide by itself or be instructed by the network to discard the first PUCCH or to discard the second PUCCH, to adapt to various scenario requirements.

Specifically, the first PUCCH and the second PUCCH may have the same PUCCH format or different PUCCH formats.

For example, if the first PUCCH overlaps in the time domain or is in the same time unit with the second PUCCH, the first PUCCH and the second PUCCH have the same priority, and the first PUCCH is in PUCCH format 0 and the second PUCCH is in PUCCH format 0/1/2/3/4, then the first PUCCH is discarded or the second PUCCH is discarded.

For another example, if the first PUCCH overlaps in the time domain or is in the same time unit with the second PUCCH, the first PUCCH and the second PUCCH have the same priority, and the first PUCCH is in PUCCH format 0/1/2/3/4, and the second PUCCH is in PUCCH format 0, then the first PUCCH is discarded or the second PUCCH is discarded.

Example 2

Taking the first PUCCH and the third PUCCH as an example, if the first PUCCH overlaps in the time domain or is in the same time unit with the third PUCCH and the first PUCCH and the third PUCCH have the same priority, the first PUCCH is discarded or the third PUCCH is discarded.

It should be noted that when the first PUCCH overlaps in the time domain or is in the same time unit with the third PUCCH and the first PUCCH and the third PUCCH have the same priority, the terminal device can decide by itself or be instructed by the network to discard the first PUCCH or to discard the third PUCCH, to adapt to various scenario requirements.

Specifically, the first PUCCH and the third PUCCH may have the same PUCCH format or different PUCCH formats.

For example, if the first PUCCH overlaps in the time domain or is in the same time unit with the third PUCCH, the first PUCCH and the third PUCCH have the same priority, and the first PUCCH is in PUCCH format 1 and the third PUCCH is in PUCCH format 0/1/2/3/4, then the first PUCCH is discarded or the third PUCCH is discarded.

For another example, if the first PUCCH overlaps in the time domain or is in the same time unit with the third PUCCH, the first PUCCH and the third PUCCH have the same priority, and the first PUCCH is in PUCCH format 0/1/2/3/4 and the second PUCCH is in PUCCH format 1, then the first PUCCH is discarded or the third PUCCH is discarded.

Example 3

Taking the first PUCCH and the PUCCH-BFR as an example, if the first PUCCH overlaps in the time domain or is in the same time unit with the PUCCH-BFR and the first PUCCH and the PUCCH-BFR have the same priority, the first PUCCH is discarded or the PUCCH-BFR is discarded.

It should be noted that when the first PUCCH overlaps in the time domain or is in the same time unit with the PUCCH-BFR, and the first PUCCH and the PUCCH-BFR have the same priority, the terminal device can decide by itself or be instructed by the network to discard the first PUCCH or to discard the PUCCH-BFR, to adapt to various scenario requirements.

Specifically, the first PUCCH and the PUCCH-BFR may have the same PUCCH format or different PUCCH-BFR formats.

For example, if the first PUCCH overlaps in the time domain or is in the same time unit with the PUCCH-BFR, the first PUCCH and the PUCCH-BFR have the same priority, and the first PUCCH is in PUCCH format 0 and the PUCCH-BFR is PUCCH format 0/1/2/3/4, then the first PUCCH is discarded or the PUCCH-BFR is discarded.

For another example, if the first PUCCH overlaps in the time domain or is in the same time unit with the PUCCH-BFR, the first PUCCH and the PUCCH-BFR have the same priority, and the first PUCCH is in PUCCH format 0/1/2/3/4 and the PUCCH-BFR is PUCCH format 1, then the first PUCCH is discarded or the PUCCH-BFR is discarded.

⑧ Bit multiplexing between first PUCCH and second PUCCH/third PUCCH/PUCCH-BFR

a. Description

It should be noted that in embodiments of the present application, the bit multiplexing between the first PUCCH and the second PUCCH/third PUCCH/PUCCH-BFR can be determined based on whether the first PUCCH and the second PUCCH/third PUCCH/PUCCH-BFR overlap in the time domain or are in the same time unit, and the relationship between the priority of the first PUCCH and the priority of the second PUCCH/third PUCCH/PUCCH-BFR.

The bit multiplexing can be understood as bit combining, etc.

The following is a detailed description of various scenarios, and these scenarios may be mutually exclusive implementations, may be mutually related implementations, or may be combined to form new scenarios, which is not limited herein.

Scenario 1

In "Scenario 1", in embodiments of the present application, one first PUCCH, one second PUCCH and K (K is a positive integer) third PUCCHs are considered.

In specific implementations, if the first PUCCH overlaps in the time domain or is in the same time unit with the second PUCCH and the K third PUCCHs, and the first PUCCH has the same priority as the second PUCCH and the K third PUCCHs, then total bits for scheduling requests on the first PUCCH and the K third PUCCHs are multiplexed onto the second PUCCH.

It should be noted that for the total bits for the scheduling requests on the first PUCCH and the K third PUCCHs, since the first PUCCH and the third PUCCH both carry SR while the second PUCCH carries CSI and/or HARQ-ACK, and the CSI and/or HARQ-ACK is represented by $O_1$ bits, the first PUCCH and the K third PUCCHs may carry a total of (K+1) SRs, that is, the total number of the scheduling requests is (K+1). In this case, the total number of the bits for the scheduling requests can be $\lceil \log_2(K+1) \rceil$. In this way, the (K+1) SRs can be represented by $\lceil \log_2(K+1) \rceil$ bits.

Since $\lceil \log_2(K+1) \rceil$ bits are multiplexed into the second PUCCH, the second PUCCH carries $\lceil \log_2(K+1) \rceil$ bits in addition to $O_1$ bits, so that the second PUCCH can carry $O_{UCI} = O_1 + \lceil \log_2(K+1) \rceil$ bits. In this way, the terminal device only needs to transmit the second PUCCH, without transmitting the first PUCCH and the K third PUCCHs.

In some possible implementations, if the first scheduling request carried by the first PUCCH is a positive SR, the $\lceil \log_2(K+1) \rceil$ bits may be used to indicate the positive SR.

In some possible implementations, if the K second scheduling requests carried by the K third PUCCHs are all negative SRs, the values of $\lceil \log_2(K+1) \rceil$ bits may be all 0.

In some possible implementations, if there is a positive SR in the K second scheduling requests carried by the K third PUCCHs, the $\lceil \log_2(K+1) \rceil$ bits may be used to indicate the positive SR.

In some possible implementations, the values of the $\lceil \log_2(K+1) \rceil$ bits are all 0, which means that the K second scheduling requests carried by the K third PUCCHs are all negative SRs.

In some possible implementations, the values of the $\lceil \log_2(K+1) \rceil$ bits are all 0, which means that the K second scheduling requests carried by the K third PUCCHs are all negative SRs and the scheduling request carried by the first PUCCH is also a negative SR.

Scenario 2

In "Scenario 2", in embodiments of the present application, one first PUCCH, one second PUCCH, P (P is a positive integer) PUCCH-BFRs, and K (K is a positive integer) third PUCCHs (the third PUCCH herein excludes PUCCH-BFR) are considered.

In specific implementations, if the first PUCCH overlaps in the time domain or is in the same time unit with the second PUCCH, the P PUCCH-BFRs, and the K third PUCCHs, and the first PUCCH has the same priority as the second PUCCH, the P PUCCH-BFRs, and the K third PUCCHs, then the total bits for the scheduling requests on the first PUCCH, the P PUCCH-BFRs, and the K third PUCCHs are multiplexed on the second PUCCH.

It should be noted that for the total bits for the scheduling requests on the first PUCCH, the P PUCCH-BFRs, and the K third PUCCHs, since the first PUCCH, the PUCCH-BFR, and the third PUCCH all carry SR while the second PUCCH carries CSI and/or HARQ-ACK, and the CSI and/or HARQ-ACK is represented by $O_1$ bits, the first PUCCH, the P PUCCH-BFRs, and the K third PUCCHs may carry a total of (P+K+1) SRs, that is, the total number of the scheduling requests is (P+K+1). In this case, the total number of the bits for scheduling requests can be $\lceil \log_2(P+K+1) \rceil$. In this way, the (P+K+1) SRs can be represented by $\lceil \log_2(P+K+1) \rceil$ bits.

Since $\lceil \log_2(P+K+1) \rceil$ bits are multiplexed into the second PUCCH, the second PUCCH carries $\lceil \log_2(P+K+1) \rceil$ bits in addition to $O_1$ bits, so that the second PUCCH can carry $\lceil \log_2(P+K+1) \rceil$ bits. In this way, the terminal device only needs to transmit the second PUCCH, without transmitting the first PUCCH, the P PUCCH-BFRs, and the K third PUCCHs.

In some possible implementations, if the first scheduling request carried by the first PUCCH is a positive SR, the $\lceil \log_2(P+K+1) \rceil$ bits may be used to indicate the positive SR.

In some possible implementations, if the K second scheduling requests carried by the K third PUCCHs and the P second scheduling requests carried by the P PUCCH-BFRs are all negative SRs, the values of the $\lceil \log_2(P+K+1) \rceil$ bits may be all 0.

In some possible implementations, if there is a positive SR in the P second scheduling requests carried by the P PUCCH-BFRs, the $\lceil \log_2(P+K+1) \rceil$ bits may be used to indicate the positive SR.

In some possible implementations, if there is a positive SR in the K second scheduling requests carried by the K third PUCCHs, the $\lceil \log_2(P+K+1) \rceil$ bits may be used to indicate the positive SR.

In some possible implementations, the values of the $\lceil \log_2(P+K+1) \rceil$ bits are all 0, which means that the K second scheduling requests carried by the K third PUCCHs are all negative SRs.

In some possible implementations, the values of the $\lceil \log_2(P+K+1) \rceil$ bits are all 0 which means that the K second scheduling requests carried by the K third PUCCHs are all negative SRs and the scheduling request carried by the first PUCCH is also a negative SR.

3. Example of communication method

1) Description

Combined with the above content, in the following, the interaction between a terminal device and a network device is taken as an example to introduce an example of a communication method in embodiments of the present application. It should be noted that the terminal device can be a chip, a chip module, or a communication module, etc., and the network device can be a chip, a chip module, or a communication module, etc.

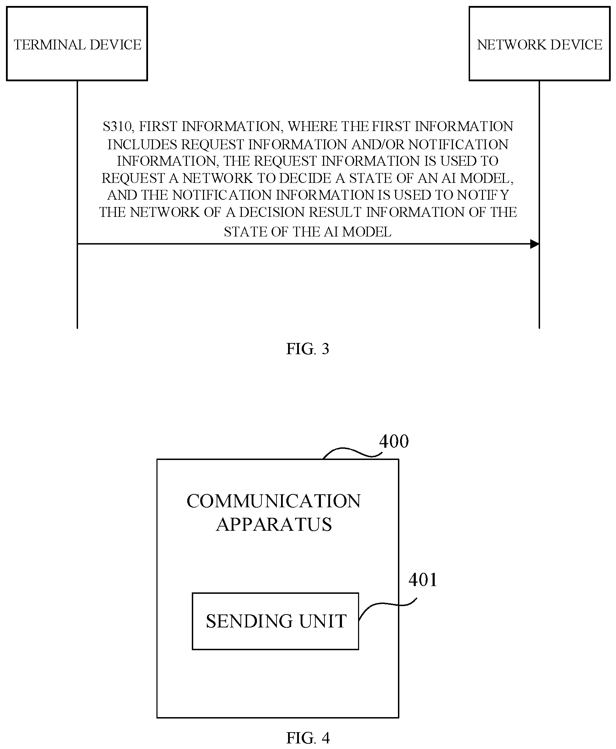

FIG. 3 is a flow chart of a communication method according to embodiments of the present application. As illustrated in FIG. 3, the communication method includes the following steps.

S310, the terminal device sends first information, where the first information includes request information and/or notification information, the request information is used to request a network to decide a state of an AI model, and the notification information is used to notify the network of a decision result information of the state of the AI model.

Accordingly, the network device receives the first information.

It should be noted that the "first information", "request information", "notification information", "state of AI model" and "decision result information" are detailed in the above content and will not be repeated herein.

As can be seen, to decide the state of the AI model, the first information is introduced in embodiments of the present application, where the first information may include the request information and/or the notification information. The request information can be used to request the network to decide the state of the AI model, and the notification information can be used to notify the network of the decision result information of the state of the AI model.

For some terminal devices, since the terminal device may need to request the network device to decide the state of the AI model, in embodiments of the present application, the decision on the state of the AI model between the terminal device and the network device can be achieved through the request information.

For some terminal devices, since the terminal device may have decided the state of the AI model itself, to ensure that the network can also be synchronized to know the decision result of the terminal device on the AI model and to avoid that the AI model is not synchronized between the terminal device and the network, in embodiments of the present application, the network can be informed of the decision result information of the state of the AI model through the notification information. As such, the decision result of the AI model can be synchronized between the terminal device and the network device and the consistency of the state of the AI model can be ensured.

2) Some possible implementations

Combined with the above content, some possible implementations are described below. For other methods not described, reference can be made to the above content for details, which is not repeated herein.

In some possible implementations, the AI model can be used for processing of air interface transmission.

Noted that, it can be known from the content of "② Role of AI model" in the above "1) AI model", which is not repeated herein.

In some possible implementations, the processing of air interface transmission can include at least one of: CSI compression, CSI recovery, CSI prediction, beam prediction, or positioning of a location of a terminal device.

Noted that, it can be known from the content of "② Role of AI model" in the above "1) AI model", which is not repeated herein.

In some possible implementations, the state of the AI model can include at least one of: an activated state, a deactivated state, an available state, an unavailable state, an updating state, a switching state, a recommended state, or a not recommended state.

Noted that, it can be known from the content of "③ State of AI model" in the above "1) AI model", which is not repeated herein.

In some possible implementations, the decision result information can include at least one of: model identification information, model function information, or model state decision information, where the model identification information can be used to identify the AI model; the model function information can indicate a model function of an identified AI model or indicate a model function of the AI model; and the model state decision information can indicate a state decision result of the identified AI model or indicate a state decision result of the AI model, where the state decision result includes at least one of: "not recommended to activate", "recommended to activate", "activated", "not recommended to deactivate", "recommended to deactivate", "deactivated", "not recommended to be available", "recommended to be available", "available", "not recommended to be unavailable", "recommended to be unavailable", "unavailable", "not recommended to update", "recommended to update", "updating", "not recommended to switch", "recommended to switch", or "switching".

Noted that, it can be known from the content of "④ Decision result information" in the above "2) First information", which is not repeated herein.

In some possible implementations, the first information can be carried by a MAC CE.

Noted that, it can be known from the content of "⑥ How to carry first information" in the above "2) First information", which is not repeated herein.

In some possible implementations, the MAC CE can include at least one byte, and a type of bits in the at least one byte can include at least one of: a first type of bits, a second type of bits, a third type of bits, a fourth type of bits, or a fifth type of bits, where the first type of bits are used to indicate whether a next byte of a byte where the first type of bits are located exists; the second type of bits are used to identify the AI model; the third type of bits are used to indicate a model function of an identified AI model or a model function of the AI model; the fourth type of bits are used to indicate a state decision result of the identified AI model or a state decision result of the AI model; and the fifth type of bits are used to request the network to decide the identified AI model or to request the network to decide a state of the identified AI model, or used to request the network to decide the AI model or to request the network to decide the state of the AI model.

Noted that, it can be known from the content of "⑦ How to carry first information by MAC CE" in the above "2) First information", which is not repeated herein.

In some possible implementations, a resource for carrying the first information can be requested by a first scheduling request, and the first scheduling request is carried by a first PUCCH.

Noted that, it can be known from the content of "① First scheduling request, first PUCCH" in the above "4) Resource for carrying first information", which is not repeated herein.

In some possible implementations, the first PUCCH overlaps or does not overlap in a time domain with an uplink channel or an uplink reference signal, or the first PUCCH is or is not in the same time unit with the uplink channel or the uplink reference signal, where the uplink channel can include at least one of a second PUCCH, a third PUCCH, or a Physical Random Access Channel (PRACH), and the uplink reference signal can include at least one of a Sounding Reference Signal (SRS), a Demodulation Reference Signal (DM-RS), or a Phase Tracking Reference Signal (PT-RS); the second PUCCH carries CSI and/or Hybrid Automatic Repeat reQuest-Acknowledgement (HARQ-ACK); and the third PUCCH carries a second scheduling request, where the second scheduling request is used to request scheduling or allocation of a resource other than the resource for carrying the first information.

Noted that, it can be known from the content of "② First PUCCH overlaps or does not overlap in time domain with uplink channel or uplink reference signal" and "③ First PUCCH is or is not in same time unit with uplink channel or uplink reference signal" in the above "4) Resource for carrying first information", which is not repeated herein.

In some possible implementations, the first PUCCH has the same priority or a different priority as the uplink channel or the uplink reference signal, the uplink channel can include at least one of a second PUCCH, a third PUCCH, or a PRACH, and the uplink reference signal can include at least one of an SRS, a DM-RS, or a PT-RS, where the second PUCCH carries CSI and/or HARQ-ACK; and the third PUCCH carries a second scheduling request, where the second scheduling request is used to request scheduling or allocation of a resource other than the resource for carrying the first information.

Noted that, it can be known from the content of "④ First PUCCH has same priority or different priority as uplink channel or uplink reference signal" in the above "4) Resource for carrying first information", which is not repeated herein.

In some possible implementations, the resource other than the resource for carrying the first information can include a PUSCH resource for carrying BFR information of a Scell.

Noted that, it can be known from the content of "② First PUCCH overlaps or does not overlap in time domain with uplink channel or uplink reference signal" in the above "4) Resource for carrying first information", which is not repeated herein.

In some possible implementations, a PUCCH format of each of the first PUCCH, the second PUCCH, and the third PUCCH can be one of: PUCCH format 0, PUCCH format 1, PUCCH format 2, PUCCH format 3, and PUCCH format 4.

Noted that, it can be known from the content of "⑤ PUCCH format of each of first PUCCH, second PUCCH, and third PUCCH" in the above "4) Resource for carrying first information", which is not repeated herein.

In some possible implementations, if the first PUCCH overlaps in the time domain or is in the same time unit with the uplink channel or the uplink reference signal and a priority of the first PUCCH is higher than a priority of the uplink channel or the uplink reference signal, the uplink channel or the uplink reference signal is discarded; and if the first PUCCH overlaps in the time domain or is in the same time unit with the uplink channel or the uplink reference signal and the priority of the first PUCCH is lower than the priority of the uplink channel or the uplink reference signal, the first PUCCH is discarded.

Noted that, it can be known from the content of "Scenario I" of "⑦ Discarding of first PUCCH, uplink channel, and uplink reference signal" in the above "4) Resource for carrying first information", which is not repeated herein.

In some possible implementations, if the first PUCCH overlaps in the time domain or is in the same time unit with the second PUCCH and the first PUCCH has the same priority as the second PUCCH, the first PUCCH is discarded or the second PUCCH is discarded.

Noted that, it can be known from the content of "Scenario II" of "⑦ Discarding of first PUCCH, uplink channel, and uplink reference signal" in the above "4) Resource for carrying first information", which is not repeated herein.

In some possible implementations, if the first PUCCH overlaps in the time domain or is in the same time unit with the third PUCCH and the first PUCCH has the same priority as the third PUCCH, the first PUCCH is discarded or the third PUCCH is discarded.

Noted that, it can be known from the content of "Scenario II" of "⑦ Discarding of first PUCCH, uplink channel, and uplink reference signal" in the above "4) Resource for carrying first information", which is not repeated herein.

In some possible implementations, if one first PUCCH overlaps in the time domain or is in the same time unit with one second PUCCH and K third PUCCHs, K being a positive integer, and the one first PUCCH has the same priority as the one second PUCCH and the K third PUCCHs, total bits for scheduling requests on the one first PUCCH and the K third PUCCHs are multiplexed onto the one second PUCCH.

Noted that, it can be known from the content of "Scenario 1" of "⑧ Bit multiplexing between first PUCCH and second PUCCH/third PUCCH/PUCCH-BFR" in the above "4) Resource for carrying first information", which is not repeated herein.

In some possible implementations, if the first scheduling request carried by the one first PUCCH is a positive scheduling request, values of the total bits for the scheduling requests are used to indicate the positive scheduling request; if K second scheduling requests carried by the K third PUCCHs are all negative scheduling requests, the values of the total bits for the scheduling requests are all 0; and if a positive scheduling request exists in the K second scheduling requests carried by the K third PUCCHs, the values of the total bits for the scheduling requests are used to indicate the positive scheduling request.

Noted that, it can be known from the content of "Scenario 1" of "⑧ Bit multiplexing between first PUCCH and second PUCCH/third PUCCH/PUCCH-BFR" in the above "4) Resource for carrying first information", which is not repeated herein.

III. Example of communication apparatus

1. Description

The solutions in embodiments of the disclosure are introduced mainly from the perspective of the method. It may be understood that, in order to realize the foregoing functions, the terminal device includes corresponding hardware structures and/or software modules for executing respective functions. Those of ordinary skill in the art will appreciate that units and algorithmic operations of various examples described in connection with embodiments herein may be implemented by hardware or by a combination of hardware and computer software. Whether these functions are performed by means of hardware or hardware driven by computer software depends on the application and the design constraints of the associated technical solution. Those skilled in the art may use different methods with regard to each particular application to implement the described functionality, but such methods may not be regarded as lying beyond the scope of the disclosure.

In embodiments of the disclosure, division of functional units of the terminal device may be implemented according to the foregoing method examples. For example, functional units may be divided to correspond to respective functions, or two or more functions may be integrated into one processing unit. The integrated unit may be implemented in a form of hardware, or may be implemented in a form of software program module. It may be noted that, the division of units in embodiments of the disclosure is illustrative and is only a division of logical functions, and other methods of division may also available in practice.

If an integrated unit is used, FIG. 4 is a block diagram illustrating functional units of a communication apparatus according to embodiments of the disclosure. The communication apparatus 400 includes a sending unit 401.

In some possible implementations, the sending unit 401 may be a module or unit configured to process signals, data, information, etc., which is not limited herein.

In some possible implementations, the communication apparatus 400 may further include a storage unit configured to store computer program codes or instructions executed by the communication apparatus 400. The storage unit may be a memory.

In some possible implementations, the communication apparatus 400 may be a chip or a chip module.

In some possible implementations, the sending unit 401 may be integrated into other units.

For example, the sending unit 401 may be integrated in a communication unit.

For another example, the sending unit 401 may be integrated in a processing unit.

It may be noted that, the communication unit may be a communication interface, a transceiver, a transceiver circuit, or the like.

The processing unit may be a processor or a controller, such as a baseband processor, a baseband chip, a Central Processing Unit (CPU), a general-purpose processor, a Digital Signal Processor (DSP), an Application-Specific Integrated Circuit (ASIC), a Field Programmable Gate Array (FPGA), or other programmable logic devices, transistor logic devices, hardware components, or any combination thereof. Various exemplary logic blocks, modules, and circuits disclosed in the disclosure may be implemented or executed. The processing unit may also be a combination for implementing computing functions, for example, one or more microprocessors, a combination of DSP and microprocessor, or the like.

In some possible implementations, the communication apparatus 400 is configured to perform any operation performed by the terminal device/chip/chip module, etc. in above method embodiments, such as transmitting or receiving data, etc., which will be described in detail below.

In specific implementation, the sending unit 401 is configured to perform any operation in above method embodiments, and when executing actions such as transmitting, other units can be selectively invoked to complete corresponding operations, which will be described in detail below.

The sending unit 401 is configured to send first information, where the first information includes request information and/or notification information, the request information is used to request a network to decide a state of an Artificial Intelligence (AI) model, and the notification information is used to notify the network of a decision result information of the state of the AI model.

As can be seen, to decide the state of the AI model, the first information is introduced in embodiments of the present application, where the first information may include the request information and/or the notification information. The request information can be used to request the network to decide the state of the AI model, and the notification information can be used to notify the network of the decision result information of the state of the AI model.

For some terminal devices, since the terminal device may need to request the network device to decide the state of the AI model, in embodiments of the present application, the decision on the state of the AI model between the terminal device and the network device can be achieved through the request information.

For some terminal devices, since the terminal device may have decided the state of the AI model itself, to ensure that the network can also be synchronized to know the decision result of the terminal device on the AI model and to avoid that the AI model is not synchronized between the terminal device and the network, in embodiments of the present application, the network can be informed of the decision result information of the state of the AI model through the notification information. As such, the decision result of the AI model can be synchronized between the terminal device and the network device and the consistency of the state of the AI model can be ensured.

It may be noted that, for the implementation of various operations in the embodiments illustrated in FIG. 4, reference can be made to the elaborations in the method embodiments above, which will not be repeated herein.

2. Some possible implementations

Some possible implementations are described below. Some specific descriptions can be found above, which is not repeated herein.

In some possible implementations, the AI model can be used for processing of air interface transmission.

Noted that, it can be known from the content of "② Role of AI model" in the above "1) AI model", which is not repeated herein.

In some possible implementations, the processing of air interface transmission can include at least one of: CSI compression, CSI recovery, CSI prediction, beam prediction, or positioning of a location of a terminal device.

Noted that, it can be known from the content of "② Role of AI model" in the above "1) AI model", which is not repeated herein.

In some possible implementations, the state of the AI model can include at least one of: an activated state, a deactivated state, an available state, an unavailable state, an updating state, a switching state, a recommended state, or a not recommended state.

Noted that, it can be known from the content of "③ State of AI model" in the above "1) AI model", which is not repeated herein.

In some possible implementations, the decision result information can include at least one of: model identification information, model function information, or model state decision information, where the model identification information can be used to identify the AI model; the model function information can indicate a model function of an identified AI model or indicate a model function of the AI model; and the model state decision information can indicate a state decision result of the identified AI model or indicate a state decision result of the AI model, where the state decision result includes at least one of: "not recommended to activate", "recommended to activate", "activated", "not recommended to deactivate", "recommended to deactivate", "deactivated", "not recommended to be available", "recommended to be available", "available", "not recommended to be unavailable", "recommended to be unavailable", "unavailable", "not recommended to update", "recommended to update", "updating", "not recommended to switch", "recommended to switch", or "switching".

Noted that, it can be known from the content of "④ Decision result information" in the above "2) First information", which is not repeated herein.

In some possible implementations, the first information can be carried by a MAC CE.

Noted that, it can be known from the content of "⑥ How to carry first information" in the above "2) First information", which is not repeated herein.

In some possible implementations, the MAC CE can include at least one byte, and a type of bits in the at least one byte can include at least one of: a first type of bits, a second type of bits, a third type of bits, a fourth type of bits, or a fifth type of bits, where the first type of bits are used to indicate whether a next byte of a byte where the first type of bits are located exists; the second type of bits are used to identify the AI model; the third type of bits are used to indicate a model function of an identified AI model or a model function of the AI model; the fourth type of bits are used to indicate a state decision result of the identified AI model or a state decision result of the AI model; and the fifth type of bits are used to request the network to decide the identified AI model or to request the network to decide a state of the identified AI model, or used to request the network to decide the AI model or to request the network to decide the state of the AI model. Noted that, it can be known from the content of "⑦ How to carry first information by MAC CE" in the above "2) First information", which is not repeated herein.

In some possible implementations, a resource for carrying the first information can be requested by a first scheduling request, and the first scheduling request is carried by a first PUCCH.

Noted that, it can be known from the content of "① First scheduling request, first PUCCH" in the above "4) Resource for carrying first information", which is not repeated herein.

In some possible implementations, the first PUCCH overlaps or does not overlap in a time domain with an uplink channel or an uplink reference signal, or the first PUCCH is or is not in the same time unit with the uplink channel or the uplink reference signal, where the uplink channel can include at least one of a second PUCCH, a third PUCCH, or a Physical Random Access Channel (PRACH), and the uplink reference signal can include at least one of a Sounding Reference Signal (SRS), a Demodulation Reference Signal (DM-RS), or a Phase Tracking Reference Signal (PT-RS); the second PUCCH carries CSI and/or Hybrid Automatic Repeat reQuest-Acknowledgement (HARQ-ACK); and the third PUCCH carries a second scheduling request, where the second scheduling request is used to request scheduling or allocation of a resource other than the resource for carrying the first information.

Noted that, it can be known from the content of "② First PUCCH overlaps or does not overlap in time domain with uplink channel or uplink reference signal" in the above "4) Resource for carrying first information", which is not repeated herein.

In some possible implementations, the first PUCCH has the same priority or a different priority as the uplink channel or the uplink reference signal, the uplink channel can include at least one of a second PUCCH, a third PUCCH, or a PRACH, and the uplink reference signal can include at least one of an SRS, a DM-RS, or a PT-RS, where the second PUCCH carries CSI and/or HARQ-ACK; and the third PUCCH carries a second scheduling request, where the second scheduling request is used to request scheduling or allocation of a resource other than the resource for carrying the first information.

Noted that, it can be known from the content of "④ First PUCCH has same priority or different priority as uplink channel or uplink reference signal" in the above "4) Resource for carrying first information", which is not repeated herein.

In some possible implementations, the resource other than the resource for carrying the first information can include a PUSCH resource for carrying BFR information of a Scell.

Noted that, it can be known from the content of "② First PUCCH overlaps or does not overlap in time domain with uplink channel or uplink reference signal" in the above "4) Resource for carrying first information", which is not repeated herein.

In some possible implementations, a PUCCH format of each of the first PUCCH, the second PUCCH, and the third PUCCH can be one of: PUCCH format 0, PUCCH format 1, PUCCH format 2, PUCCH format 3, and PUCCH format 4.

Noted that, it can be known from the content of "⑤ PUCCH format of each of first PUCCH, second PUCCH, and third PUCCH" in the above "4) Resource for carrying first information", which is not repeated herein.

In some possible implementations, if the first PUCCH overlaps in the time domain or is in the same time unit with the uplink channel or the uplink reference signal and a priority of the first PUCCH is higher than a priority of the uplink channel or the uplink reference signal, the uplink channel or the uplink reference signal is discarded; and if the first PUCCH overlaps in the time domain or is in the same time unit with the uplink channel or the uplink reference signal and the priority of the first PUCCH is lower than the priority of the uplink channel or the uplink reference signal, the first PUCCH is discarded.

Noted that, it can be known from the content of "Scenario I" of "⑦ Discarding of first PUCCH, uplink channel, and uplink reference signal" in the above "4) Resource for carrying first information", which is not repeated herein.

In some possible implementations, if the first PUCCH overlaps in the time domain or is in the same time unit with the second PUCCH and the first PUCCH has the same priority as the second PUCCH, the first PUCCH is discarded or the second PUCCH is discarded.

Noted that, it can be known from the content of "Scenario II" of "⑦ Discarding of first PUCCH, uplink channel, and uplink reference signal" in the above "4) Resource for carrying first information", which is not repeated herein.

In some possible implementations, if the first PUCCH overlaps in the time domain or is in the same time unit with the third PUCCH and the first PUCCH has the same priority as the third PUCCH, the first PUCCH is discarded or the third PUCCH is discarded.

Noted that, it can be known from the content of "Scenario II" of "⑦ Discarding of first PUCCH, uplink channel, and uplink reference signal" in the above "4) Resource for carrying first information", which is not repeated herein.

In some possible implementations, if one first PUCCH overlaps in the time domain or is in the same time unit with one second PUCCH and K third PUCCHs, K being a positive integer, and the one first PUCCH has the same priority as the one second PUCCH and the K third PUCCHs, total bits for scheduling requests on the one first PUCCH and the K third PUCCHs are multiplexed onto the one second PUCCH.

Noted that, it can be known from the content of "Scenario 1" of "⑧ Bit multiplexing between first PUCCH and second PUCCH/third PUCCH/PUCCH-BFR" in the above "4) Resource for carrying first information", which is not repeated herein.

In some possible implementations, if the first scheduling request carried by the one first PUCCH is a positive scheduling request, values of the total bits for the scheduling requests are used to indicate the positive scheduling request; if K second scheduling requests carried by the K third PUCCHs are all negative scheduling requests, the values of the total bits for the scheduling requests are all 0; and if a positive scheduling request exists in the K second scheduling requests carried by the K third PUCCHs, the values of the total bits for the scheduling requests are used to indicate the positive scheduling request.

Noted that, it can be known from the content of "Scenario 1" of "⑧ Bit multiplexing between first PUCCH and second PUCCH/third PUCCH/PUCCH-BFR" in the above "4) Resource for carrying first information", which is not repeated herein.

## IV. Example of another communication apparatus

### 1. Description

The solutions in embodiments of the disclosure are introduced mainly from the perspective of the method. It may be understood that, in order to realize the foregoing functions, the network device includes corresponding hardware structures and/or software modules for executing respective functions. Those of ordinary skill in the art will appreciate that units and algorithmic operations of various examples described in connection with embodiments herein may be implemented by hardware or by a combination of hardware and computer software. Whether these functions are performed by means of hardware or hardware driven by computer software depends on the application and the design constraints of the associated technical solution. Those skilled in the art may use different methods with regard to each particular application to implement the described functionality, but such methods may not be regarded as lying beyond the scope of the disclosure.

In embodiments of the disclosure, division of functional units of the network device may be implemented according to the foregoing method examples. For example, functional units may be divided to correspond to respective functions, or two or more functions may be integrated into one processing unit. The integrated unit may be implemented in a form of hardware, or may be implemented in a form of software program module. It may be noted that, the division of units in embodiments of the disclosure is illustrative and is only a division of logical functions, and other methods of division may also available in practice.

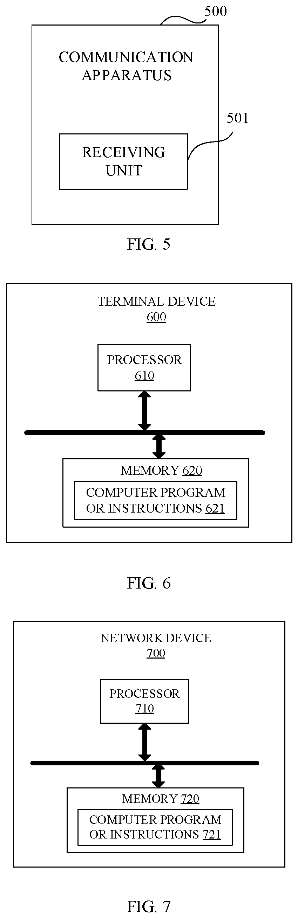

If an integrated unit is used, FIG. 5 is a block diagram illustrating functional units of another communication apparatus according to embodiments of the disclosure. The communication apparatus 500 includes a receiving unit 501.

In some possible implementations, the receiving unit 501 may be a module or unit configured to process signals, data, information, etc., which is not limited herein.

In some possible implementations, the communication apparatus 500 may further include a storage unit configured to store computer program codes or instructions executed by the communication apparatus 500. The storage unit may be a memory.

In some possible implementations, the communication apparatus 500 may be a chip or a chip module.

In some possible implementations, the receiving unit 501 may be integrated into other units.

For example, the receiving unit 501 may be integrated in a communication unit.

For another example, the receiving unit 501 may be integrated in a processing unit.

It may be noted that, the communication unit may be a communication interface, a transceiver, a transceiver circuit, or the like.

The processing unit may be a processor or a controller, such as a baseband processor, a baseband chip, a Central Processing Unit (CPU), a general-purpose processor, a Digital Signal Processor (DSP), an Application-Specific Integrated Circuit (ASIC), a Field Programmable Gate Array (FPGA), or other programmable logic devices, transistor logic devices, hardware components, or any combination thereof. Various exemplary logic blocks, modules, and circuits disclosed in the disclosure may be implemented or executed. The processing unit may also be a combination for implementing computing functions, for example, one or more microprocessors, a combination of DSP and microprocessor, or the like.

In some possible implementations, the communication apparatus 500 is configured to perform any operation performed by the network device/chip/chip module, etc. in above method embodiments, such as transmitting or receiving data, etc., which will be described in detail below.

In specific implementation, the receiving unit 501 is configured to perform any operation in above method embodiments, and when executing actions such as transmitting, other units can be selectively invoked to complete corresponding operations, which will be described in detail below.

The receiving unit 501 is configured to receive first information, where the first information includes request information and/or notification information, the request information is used to request a network to decide a state of an Artificial Intelligence (AI) model, and the notification information is used to notify the network of a decision result information of the state of the AI model.

As can be seen, to decide the state of the AI model, the first information is introduced in embodiments of the present application, where the first information may include the request information and/or the notification information. The request information can be used to request the network to decide the state of the AI model, and the notification information can be used to notify the network of the decision result information of the state of the AI model.

For some terminal devices, since the terminal device may need to request the network device to decide the state of the AI model, in embodiments of the present application, the decision on the state of the AI model between the terminal device and the network device can be achieved through the request information.

For some terminal devices, since the terminal device may have decided the state of the AI model itself, to ensure that the network can also be synchronized to know the decision result of the terminal device on the AI model and to avoid that the AI model is not synchronized between the terminal device and the network, in embodiments of the present application, the network can be informed of the decision result information of the state of the AI model through the notification information. As such, the decision result of the AI model can be synchronized between the terminal device and the network device and the consistency of the state of the AI model can be ensured.

It may be noted that, for the implementation of various operations in the embodiments illustrated in FIG. 5, reference can be made to the elaborations in the method embodiments above, which will not be repeated herein.

2. Some possible implementations

Some possible implementations are described below. Some specific descriptions can be found above, which is not repeated herein.

In some possible implementations, the AI model can be used for processing of air interface transmission.

Noted that, it can be known from the content of "② Role of AI model" in the above "1) AI model", which is not repeated herein.

In some possible implementations, the processing of air interface transmission can include at least one of: CSI compression, CSI recovery, CSI prediction, beam prediction, or positioning of a location of a terminal device.

Noted that, it can be known from the content of "② Role of AI model" in the above "1) AI model", which is not repeated herein.

In some possible implementations, the state of the AI model can include at least one of: an activated state, a deactivated state, an available state, an unavailable state, an updating state, a switching state, a recommended state, or a not recommended state.

Noted that, it can be known from the content of "③ State of AI model" in the above "1) AI model", which is not repeated herein.

In some possible implementations, the decision result information can include at least one of: model identification information, model function information, or model state decision information, where the model identification information can be used to identify the AI model; the model function information can indicate a model function of an identified AI model or indicate a model function of the AI model; and the model state decision information can indicate a state decision result of the identified AI model or indicate a state decision result of the AI model, where the state decision result includes at least one of: "not recommended to activate", "recommended to activate", "activated", "not recommended to deactivate", "recommended to deactivate", "deactivated", "not recommended to be available", "recommended to be available", "available", "not recommended to be unavailable", "recommended to be unavailable", "unavailable", "not recommended to update", "recommended to update", "updating", "not recommended to switch", "recommended to switch", or "switching".

Noted that, it can be known from the content of "④ Decision result information" in the above "2) First information", which is not repeated herein.

In some possible implementations, the first information can be carried by a MAC CE.

Noted that, it can be known from the content of "⑥ How to carry first information" in the above "2) First information", which is not repeated herein.

In some possible implementations, the MAC CE can include at least one byte, and a type of bits in the at least one byte can include at least one of: a first type of bits, a second type of bits, a third type of bits, a fourth type of bits, or a fifth type of bits, where the first type of bits are used to indicate whether a next byte of a byte where the first type of bits are located exists; the second type of bits are used to identify the AI model; the third type of bits are used to indicate a model function of an identified AI model or a model function of the AI model; the fourth type of bits are used to indicate a state decision result of the identified AI model or a state decision result of the AI model; and the fifth type of bits are used to request the network to decide the identified AI model or to request the network to decide a state of the identified AI model, or used to request the network to decide the AI model or to request the network to decide the state of the AI model. Noted that, it can be known from the content of "⑦ How to carry first information by MAC CE" in the above "2) First information", which is not repeated herein.

In some possible implementations, a resource for carrying the first information can be requested by a first scheduling request, and the first scheduling request is carried by a first PUCCH.

Noted that, it can be known from the content of "① First scheduling request, first PUCCH" in the above "4) Resource for carrying first information", which is not repeated herein.

In some possible implementations, the first PUCCH overlaps or does not overlap in a time domain with an uplink channel or an uplink reference signal, where the uplink channel can include at least one of a second PUCCH, a third PUCCH, or a Physical Random Access Channel (PRACH), and the uplink reference signal can include at least one of a Sounding Reference Signal (SRS), a Demodulation Reference Signal (DM-RS), or a Phase Tracking Reference Signal (PT-RS); the second PUCCH carries CSI and/or Hybrid Automatic Repeat reQuest-Acknowledgement (HARQ-ACK); and the third PUCCH carries a second scheduling request, where the second scheduling request is used to request scheduling or allocation of a resource other than the resource for carrying the first information.

Noted that, it can be known from the content of "② First PUCCH overlaps or does not overlap in time domain with uplink channel or uplink reference signal" in the above "4) Resource for carrying first information", which is not repeated herein.

In some possible implementations, the first PUCCH has the same priority or a different priority as the uplink channel or the uplink reference signal, the uplink channel can include at least one of a second PUCCH, a third PUCCH, or a PRACH, and the uplink reference signal can include at least one of an SRS, a DM-RS, or a PT-RS, where the second PUCCH carries CSI and/or HARQ-ACK; and the third PUCCH carries a second scheduling request, where the second scheduling request is used to request scheduling or allocation of a resource other than the resource for carrying the first information.

Noted that, it can be known from the content of "④ First PUCCH has same priority or different priority as uplink channel or uplink reference signal" in the above "4) Resource for carrying first information", which is not repeated herein.

In some possible implementations, the resource other than the resource for carrying the first information can include a PUSCH resource for carrying BFR information of a Scell.

Noted that, it can be known from the content of "② First PUCCH overlaps or does not overlap in time domain with uplink channel or uplink reference signal" in the above "4) Resource for carrying first information", which is not repeated herein.

In some possible implementations, a PUCCH format of each of the first PUCCH, the second PUCCH, and the third PUCCH can be one of: PUCCH format 0, PUCCH format 1, PUCCH format 2, PUCCH format 3, and PUCCH format 4.

Noted that, it can be known from the content of "⑤ PUCCH format of each of first PUCCH, second PUCCH, and third PUCCH" in the above "4) Resource for carrying first information", which is not repeated herein.

In some possible implementations, if the first PUCCH overlaps in the time domain or is in the same time unit with the uplink channel or the uplink reference signal and a priority of the first PUCCH is higher than a priority of the uplink channel or the uplink reference signal, the uplink channel or the uplink reference signal is discarded; and if the first PUCCH overlaps in the time domain or is in the same time unit with the uplink channel or the uplink reference signal and the priority of the first PUCCH is lower than the priority of the uplink channel or the uplink reference signal, the first PUCCH is discarded.

Noted that, it can be known from the content of "Scenario I" of "⑦ Discarding of first PUCCH, uplink channel, and uplink reference signal" in the above "4) Resource for carrying first information", which is not repeated herein.

In some possible implementations, if the first PUCCH overlaps in the time domain or is in the same time unit with the second PUCCH and the first PUCCH has the same priority as the second PUCCH, the first PUCCH is discarded or the second PUCCH is discarded.

Noted that, it can be known from the content of "Scenario II" of "⑦ Discarding of first PUCCH, uplink channel, and uplink reference signal" in the above "4) Resource for carrying first information", which is not repeated herein.

In some possible implementations, if the first PUCCH overlaps in the time domain or is in the same time unit with the third PUCCH and the first PUCCH has the same priority as the third PUCCH, the first PUCCH is discarded or the third PUCCH is discarded.

Noted that, it can be known from the content of "Scenario II" of "⑦ Discarding of first PUCCH, uplink channel, and uplink reference signal" in the above "4) Resource for carrying first information", which is not repeated herein.

In some possible implementations, if one first PUCCH overlaps in the time domain or is in the same time unit with one second PUCCH and K third PUCCHs, K being a positive integer, and the one first PUCCH has the same priority as the one second PUCCH and the K third PUCCHs, total bits for scheduling requests on the one first PUCCH and the K third PUCCHs are multiplexed onto the one second PUCCH.

Noted that, it can be known from the content of "Scenario 1" of "⑧ Bit multiplexing between first PUCCH and second PUCCH/third PUCCH/PUCCH-BFR" in the above "4) Resource for carrying first information", which is not repeated herein.

In some possible implementations, if the first scheduling request carried by the one first PUCCH is a positive scheduling request, values of the total bits for the scheduling requests are used to indicate the positive scheduling request; if K second scheduling requests carried by the K third PUCCHs are all negative scheduling requests, the values of the total bits for the scheduling requests are all 0; and if a positive scheduling request exists in the K second scheduling requests carried by the K third PUCCHs, the values of the total bits for the scheduling requests are used to indicate the positive scheduling request.

Noted that, it can be known from the content of "Scenario 1" of "⑧ Bit multiplexing between first PUCCH and second PUCCH/third PUCCH/PUCCH-BFR" in the above "4) Resource for carrying first information", which is not repeated herein.

V. Example of terminal device

FIG. 6 is a schematic structural diagram of a terminal device according to embodiments of the disclosure. The terminal device 600 may include a processor 610, a memory 620, and a communication bus configured to connect the processor 610 and the memory 620.

In some possible implementations, the memory 620 includes but is not limited to a Random Access Memory (RAM), a Read-Only Memory (ROM), an Erasable Programmable Read-Only Memory (EPROM), or a Compact Disc Read-Only Memory (CD-ROM). The memory 620 is configured to store program codes executed by the terminal device 600 and data transmitted by the terminal device 600.

In some possible implementations, the terminal device 600 further includes a communication interface configured to receive and transmit data.

In some possible implementations, the terminal device 600 can be the first terminal device above.

In some possible implementations, the processor 610 may be one or more CPUs. When the processor 610 is one CPU, the CPU may be a single-core CPU or a multi-core CPU.

In some possible implementations, the processor 610 may be a baseband chip, a chip, a CPU, a general-purpose processor, a DSP, an ASIC, an FPGA, or other programmable logic devices, transistor logic devices, hardware components, or any combination thereof.

In specific implementation, the processor 610 in the terminal device 600 is configured to execute a computer program or instructions 621 stored in the memory 620 to: send first information, where the first information includes request information and/or notification information, the request information is used to request a network to decide a state of an Artificial Intelligence (AI) model, and the notification information is used to notify the network of a decision result information of the state of the AI model.

As can be seen, to decide the state of the AI model, the first information is introduced in embodiments of the present application, where the first information may include the request information and/or the notification information. The request information can be used to request the network to decide the state of the AI model, and the notification information can be used to notify the network of the decision result information of the state of the AI model.

For some terminal devices, since the terminal device may need to request the network device to decide the state of the AI model, in embodiments of the present application, the decision on the state of the AI model between the terminal device and the network device can be achieved through the request information.

For some terminal devices, since the terminal device may have decided the state of the AI model itself, to ensure that the network can also be synchronized to know the decision result of the terminal device on the AI model and to avoid that the AI model is not synchronized between the terminal device and the network, in embodiments of the present application, the network can be informed of the decision result information of the state of the AI model through the notification information. As such, the decision result of the AI model can be synchronized between the terminal device and the network device and the consistency of the state of the AI model can be ensured.

It may be noted that, for the implementation of various operations, reference can be made to the corresponding elaborations of the method embodiments above. The terminal device 600 may be configured to perform the foregoing method embodiments of the disclosure, which will not be repeated herein.

VI. Example of network device

FIG. 7 is a schematic structural diagram of a network device according to embodiments of the disclosure. The network device 700 includes a processor 710, a memory 720, and a communication bus configured to connect the processor 710 and the memory 720.

In some possible implementations, the memory 720 includes but is not limited to an RAM, an ROM, an EPROM, or a CD-ROM. The memory 720 is configured to store related instructions and data.

In some possible implementations, the network device 700 further includes a communication interface configured to receive and transmit data.

In some possible implementations, the processor 710 may be one or more CPUs. When the processor 710 is one CPU, the CPU may be a single-core CPU or a multi-core CPU.

In some possible implementations, the processor 710 may be a baseband chip, a chip, a CPU, a general-purpose processor, a DSP, an ASIC, an FPGA, or other programmable logic devices, transistor logic devices, hardware components, or any combination thereof.

In some implementations, the processor 710 in the network device 700 is configured to execute a computer program or instructions 721 stored in the memory 720 to: receive first information, where the first information includes request information and/or notification information, the request information is used to request a network to decide a state of an Artificial Intelligence (AI) model, and the notification information is used to notify the network of a decision result information of the state of the AI model.

As can be seen, to decide the state of the AI model, the first information is introduced in embodiments of the present application, where the first information may include the request information and/or the notification information. The request information can be used to request the network to decide the state of the AI model, and the notification information can be used to notify the network of the decision result information of the state of the AI model.

For some terminal devices, since the terminal device may need to request the network device to decide the state of the AI model, in embodiments of the present application, the decision on the state of the AI model between the terminal device and the network device can be achieved through the request information.

For some terminal devices, since the terminal device may have decided the state of the AI model itself, to ensure that the network can also be synchronized to know the decision result of the terminal device on the AI model and to avoid that the AI model is not synchronized between the terminal device and the network, in embodiments of the present application, the network can be informed of the decision result information of the state of the AI model through the notification information. As such, the decision result of the AI model can be synchronized between the terminal device and the network device and the consistency of the state of the AI model can be ensured.

It may be noted that, for the implementation of various operations, reference can be made to the corresponding elaborations of the method embodiments above. The network device 700 may be configured to perform the foregoing method embodiments of the disclosure, which will not be repeated herein.

VII. Other related examples

In some possible implementations, the above method embodiments may be applied to or in a terminal device. That is, the execution entity of the above method embodiments may be a terminal device, a chip, a chip module, or a module, etc., which is not limited herein.

In some possible implementations, the above method embodiments may be applied to or in a network device. That is, the execution subject of the above method embodiments may be a network device, a chip, a chip module, or a module, etc., which is not limited herein.

A chip is further provided in embodiments of the disclosure. The chip includes a processor, a memory, and a computer program or instructions stored in the memory. The processor is configured to execute the computer program or instructions to perform the operations of the above method embodiments.

A chip module is further provided in embodiments of the disclosure. The chip module includes a transceiver assembly and a chip. The chip includes a processor, a memory, and a computer program or instructions stored in the memory. The processor is configured to execute the computer program or instructions to perform the operations of the above method embodiments.

A computer-readable storage medium is further provided in embodiments of the disclosure. The computer-readable storage medium is configured to store a computer program or instructions which, when executed, is operable to implement the operations of the above method embodiments.

A computer program product is further provided in embodiments of the disclosure. The computer program product includes a computer program or instructions which, when executed, is operable to implement the operations of the above method embodiments.

A communication system is further provided in embodiments of the disclosure. The communication system includes the terminal device and the network device above.

It may be noted that, for the sake of brevity, the foregoing embodiments are described as a series of action combinations. However, it will be appreciated by those skilled in the art that the disclosure is not limited to the sequence of actions described. According to embodiments of the disclosure, some steps may be performed in other orders or simultaneously. In addition, it will be appreciated by those skilled in the art that the embodiments described in the specification are preferable embodiments, and the actions, steps, modules, or units involved are not necessarily essential to the disclosure.

In the foregoing embodiments, the elaboration of each embodiment has its own emphasis. For the parts not described in detail in one embodiment, reference can be made to related elaborations in other embodiments.

The operations of the method or algorithm described in embodiments of the disclosure may be implemented by means of hardware, or may be implemented by executing software instructions by a processor. The software instructions can be implemented by corresponding software modules, which can be stored in an RAM, a flash memory, an ROM, an EPROM, an Electrically EPROM (EEPROM), registers, hard disk, mobile hard disk, Compact Disc (CD)-ROM, or any other form of storage medium known in the art. An exemplary storage medium is coupled to the processor, such that the processor can read information from the storage medium and write information to the storage medium. The storage medium can also be a component of the processor. The processor and the storage medium may be located in an ASIC. In addition, the ASIC can be located in a terminal device or a management device. The processor and the storage medium may also be present as discrete components in the terminal device or the management device.

Those skilled in the art will appreciate that, all or part of functions described in embodiments of the disclosure can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a Digital Subscriber Line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disc, a hard disc, or a magnetic tape), an optical medium (such as a Digital Video Disc (DVD)), or a semiconductor medium (such as a Solid State Disk (SSD)), etc.

Each module/unit in various devices or products described in the foregoing embodiments may be a software module/unit or a hardware module/unit, or some may be a software module/unit and some may be a hardware module/unit. For example, with regard to various devices or products applied to or integrated into a chip, various modules/units included therein may all be realized by means of hardware such as a circuit. Alternatively, at least some of the modules/units may be realized by means of a software program run on a processor integrated into the chip, and the rest (if any) modules/units may be implemented by means of hardware such as a circuit. The same also applies to various devices or products applied to or integrated into a chip module or various devices or products applied to or integrated into a terminal device.

The objectives, technical solutions, and advantages of embodiments of the disclosure are described in detail in the foregoing implementations. It may be appreciated that, the foregoing elaborations are merely some implementations of embodiments of the disclosure, but are not intended to limit the protection scope of embodiments of the disclosure. Any modifications, equivalent replacements, improvements, and the like made based on the technical solutions of embodiments of the disclosure shall all fall within the protection scope of embodiments of the disclosure.

## Claims

1. A communication method, comprising:
   sending first information, wherein the first information comprises request information and/or notification information, the request information is used to request a network to decide a state of an Artificial Intelligence (AI) model, and the notification information is used to notify the network of a decision result information of the state of the AI model.

2. The method of claim 1, wherein the AI model is used for processing of air interface transmission.

3. The method of claim 2, wherein the processing of air interface transmission comprises at least one of: Channel State Information (CSI) compression, CSI recovery, CSI prediction, beam prediction, or positioning of a location of a terminal device.

4. The method of claim 1, wherein the state of the AI model comprises at least one of: an activated state, a deactivated state, an available state, an unavailable state, an updating state, a switching state, a recommended state, or a not recommended state.

5. The method of claim 1, wherein the decision result information comprises at least one of: model identification information, model function information, or model state decision information, wherein

   the model identification information is used to identify the AI model;
   the model function information indicates a model function of an identified AI model or a model function of the AI model; and
   the model state decision information indicates a state decision result of the identified AI model or a state decision result of the AI model, wherein the state decision result comprises at least one of: "not recommended to activate", "recommended to activate", "activated", "not recommended to deactivate", "recommended to deactivate", "deactivated", "not recommended to be available", "recommended to be available", "available", "not recommended to be unavailable", "recommended to be unavailable", "unavailable", "not recommended to update", "recommended to update", "updating", "not recommended to switch", "recommended to switch", or "switching".

6. The method of claim 1, wherein the first information is carried by a Medium Access Control (MAC) Control Element (CE).

7. The method of claim 6, wherein the MAC CE comprises at least one byte, and a type of bits in the at least one byte comprises at least one of: a first type of bits, a second type of bits, a third type of bits, a fourth type of bits, or a fifth type of bits, wherein

   the first type of bits are used to indicate whether a next byte of a byte where the first type of bits are located exists;
   the second type of bits are used to identify the AI model;

the third type of bits are used to indicate a model function of an identified AI model or a model function of the AI model;
the fourth type of bits are used to indicate a state decision result of the identified AI model or a state decision result of the AI model; and
the fifth type of bits are used to request the network to decide the identified AI model or to request the network to decide a state of the identified AI model, or used to request the network to decide the AI model or to request the network to decide the state of the AI model.

8. The method of claim 1, wherein a resource for carrying the first information is requested by a first scheduling request, and the first scheduling request is carried by a first Physical Uplink Control Channel (PUCCH).

9. The method of claim 8, wherein the first PUCCH overlaps or does not overlap in a time domain with an uplink channel or an uplink reference signal, or the first PUCCH is or is not in the same time unit with the uplink channel or the uplink reference signal, wherein

the uplink channel comprises at least one of a second PUCCH, a third PUCCH, or a Physical Random Access Channel (PRACH), and the uplink reference signal comprises at least one of a Sounding Reference Signal (SRS), a Demodulation Reference Signal (DM-RS), or a Phase Tracking Reference Signal (PT-RS);
the second PUCCH carries CSI and/or Hybrid Automatic Repeat reQuest-Acknowledgement (HARQ-ACK); and
the third PUCCH carries a second scheduling request, where the second scheduling request is used to request scheduling or allocation of a resource other than the resource for carrying the first information.

10. The method of claim 8, wherein the first PUCCH has the same priority or a different priority as the uplink channel or the uplink reference signal, the uplink channel comprises at least one of a second PUCCH, a third PUCCH, or a PRACH, and the uplink reference signal comprises at least one of an SRS, a DM-RS, or a PT-RS, wherein

the second PUCCH carries CSI and/or HARQ-ACK; and
the third PUCCH carries a second scheduling request, where the second scheduling request is used to request scheduling or allocation of a resource other than the resource for carrying the first information.

11. The method of claim 9 or 10, wherein the resource other than the resource for carrying the first information comprises a Physical Uplink Shared Channel (PUSCH) resource for carrying Beam Failure Recovery (BFR) information of a Secondary Cell (Scell).

12. The method of claim 9 or 10, wherein a PUCCH format of each of the first PUCCH, the second PUCCH, and the third PUCCH is one of:
PUCCH format 0, PUCCH format 1, PUCCH format 2, PUCCH format 3, and PUCCH format 4.

13. The method of any of claims 9 to 12, wherein

if the first PUCCH overlaps in the time domain or is in the same time unit with the uplink channel or the uplink reference signal and a priority of the first PUCCH is higher than a priority of the uplink channel or the uplink reference signal, the uplink channel or the uplink reference signal is discarded; and
if the first PUCCH overlaps in the time domain or is in the same time unit with the uplink channel or the uplink reference signal and the priority of the first PUCCH is lower than the priority of the uplink channel or the uplink reference signal, the first PUCCH is discarded.

14. The method of any of claims 9 to 12, wherein if the first PUCCH overlaps in the time domain or is in the same time unit with the second PUCCH and the first PUCCH has the same priority as the second PUCCH, the first PUCCH is discarded or the second PUCCH is discarded.

15. The method of any of claims 9 to 12, wherein if the first PUCCH overlaps in the time domain or is in the same time unit with the third PUCCH and the first PUCCH has the same priority as the third PUCCH, the first PUCCH is discarded or the third PUCCH is discarded.

16. The method of any of claims 9 to 12, wherein if one first PUCCH overlaps in the time domain or is in the same time unit with one second PUCCH and K third PUCCHs, K being a positive integer, and the one first PUCCH has the same priority as the one second PUCCH and the K third PUCCHs, total bits for scheduling requests on the one first PUCCH and the K third PUCCHs are multiplexed onto the one second PUCCH.

17. The method of claim 16, wherein

if the first scheduling request carried by the one first PUCCH is a positive scheduling request, values of the total bits for the scheduling requests are used to indicate the positive scheduling request;

if K second scheduling requests carried by the K third PUCCHs are all negative scheduling requests, the values of the total bits for the scheduling requests are all 0; and

if a positive scheduling request exists in the K second scheduling requests carried by the K third PUCCHs, the values of the total bits for the scheduling requests are used to indicate the positive scheduling request.

18. A communication method, comprising:
receiving first information, wherein the first information comprises request information and/or notification information, the request information is used to request a network to decide a state of an Artificial Intelligence (AI) model, and the notification information is used to notify the network of a decision result information of the state of the AI model.

19. The method of claim 18, wherein the AI model is used for processing of air interface transmission.

20. The method of claim 19, wherein the processing of air interface transmission comprises at least one of: Channel State Information (CSI) compression, CSI recovery, CSI prediction, beam prediction, or positioning of a location of a terminal device.

21. The method of claim 18, wherein the state of the AI model comprises at least one of: an activated state, a deactivated state, an available state, an unavailable state, an updating state, a switching state, a recommended state, or a not recommended state.

22. The method of claim 18, wherein the decision result information comprises at least one of: model identification information, model function information, or model state decision information, wherein

the model identification information is used to identify the AI model;

the model function information indicates a model function of an identified AI model or a model function of the AI model; and

the model state decision information indicates a state decision result of the identified AI model or a state decision result of the AI model, wherein the state decision result comprises at least one of: "not recommended to activate", "recommended to activate", "activated", "not recommended to deactivate", "recommended to deactivate", "deactivated", "not recommended to be available", "recommended to be available", "available", "not recommended to be unavailable", "recommended to be unavailable", "unavailable", "not recommended to update", "recommended to update", "updating", "not recommended to switch", "recommended to switch", or "switching".

23. The method of claim 18, wherein the first information is carried by a Medium Access Control (MAC) Control Element (CE).

24. The method of claim 23, wherein the MAC CE comprises at least one byte, and a type of bits in the at least one byte comprises at least one of: a first type of bits, a second type of bits, a third type of bits, a fourth type of bits, or a fifth type of bits, wherein

the first type of bits are used to indicate whether a next byte of a byte where the first type of bits are located exists;

the second type of bits are used to identify the AI model;

the third type of bits are used to indicate a model function of an identified AI model or a model function of the AI model;

the fourth type of bits are used to indicate a state decision result of the identified AI model or a state decision result of the AI model; and

the fifth type of bits are used to request the network to decide the identified AI model or to request the network to decide a state of the identified AI model, or used to request the network to decide the AI model or to request the network to decide the state of the AI model.

25. The method of claim 18, wherein a resource for carrying the first information is requested by a first scheduling request, and the first scheduling request is carried by a first Physical Uplink Control Channel (PUCCH).

26. The method of claim 25, wherein the first PUCCH overlaps or does not overlap in a time domain with an uplink channel or an uplink reference signal, or the first PUCCH is or is not in the same time unit with the uplink channel or the uplink reference signal, wherein

the uplink channel comprises at least one of a second PUCCH, a third PUCCH, or a Physical Random Access Channel (PRACH), and the uplink reference signal comprises at least one of a Sounding Reference Signal (SRS), a Demodulation Reference Signal (DM-RS), or a Phase Tracking Reference Signal (PT-RS);

the second PUCCH carries CSI and/or Hybrid Automatic Repeat reQuest-Acknowledgement (HARQ-ACK); and

the third PUCCH carries a second scheduling request, where the second scheduling request is used to request scheduling or allocation of a resource other than the resource for carrying the first information.

27. The method of claim 25, wherein the first PUCCH has the same priority or a different priority as the uplink channel or the uplink reference signal, the uplink channel comprises at least one of a second PUCCH, a third PUCCH, or a PRACH, and the uplink reference signal comprises at least one of an SRS, a DM-RS, or a PT-RS, wherein

the second PUCCH carries CSI and/or HARQ-ACK; and
the third PUCCH carries a second scheduling request, where the second scheduling request is used to request scheduling or allocation of a resource other than the resource for carrying the first information.

28. The method of claim 26 or 27, wherein the resource other than the resource for carrying the first information comprises a Physical Uplink Shared Channel (PUSCH) resource for carrying Beam Failure Recovery (BFR) information of a Secondary Cell (Scell).

29. The method of claim 26 or 27, wherein a PUCCH format of each of the first PUCCH, the second PUCCH, and the third PUCCH is one of:
PUCCH format 0, PUCCH format 1, PUCCH format 2, PUCCH format 3, and PUCCH format 4.

30. The method of any of claims 26 to 29, wherein

if the first PUCCH overlaps in the time domain or is in the same time unit with the uplink channel or the uplink reference signal and a priority of the first PUCCH is higher than a priority of the uplink channel or the uplink reference signal, the uplink channel or the uplink reference signal is discarded; and
if the first PUCCH overlaps in the time domain or is in the same time unit with the uplink channel or the uplink reference signal and the priority of the first PUCCH is lower than the priority of the uplink channel or the uplink reference signal, the first PUCCH is discarded.

31. The method of any of claims 26 to 29, wherein if the first PUCCH overlaps in the time domain or is in the same time unit with the second PUCCH and the first PUCCH has the same priority as the second PUCCH, the first PUCCH is discarded or the second PUCCH is discarded.

32. The method of any of claims 26 to 29, wherein if the first PUCCH overlaps in the time domain or is in the same time unit with the third PUCCH and the first PUCCH has the same priority as the third PUCCH, the first PUCCH is discarded or the third PUCCH is discarded.

33. The method of any of claims 26 to 29, wherein if one first PUCCH overlaps in the time domain or is in the same time unit with one second PUCCH and K third PUCCHs, K being a positive integer, and the one first PUCCH has the same priority as the one second PUCCH and the K third PUCCHs, total bits for scheduling requests on the one first PUCCH and the K third PUCCHs are multiplexed onto the one second PUCCH.

34. The method of claim 33, wherein

if the first scheduling request carried by the one first PUCCH is a positive scheduling request, values of the total bits for the scheduling requests are used to indicate the positive scheduling request;
if K second scheduling requests carried by the K third PUCCHs are all negative scheduling requests, the values of the total bits for the scheduling requests are all 0; and
if a positive scheduling request exists in the K second scheduling requests carried by the K third PUCCHs, the values of the total bits for the scheduling requests are used to indicate the positive scheduling request.

35. A communication apparatus, comprising:
a sending unit configured to send first information, wherein the first information comprises request information and/or notification information, the request information is used to request a network to decide a state of an Artificial Intelligence (AI) model, and the notification information is used to notify the network of a decision result information of the state of the AI model.

36. A communication apparatus, comprising:
a receiving unit configured to send first information, wherein the first information comprises request information and/or notification information, the request information is used to request a network to decide a state of an Artificial Intelligence (AI) model, and the notification information is used to notify the network of a decision result information of the state of the AI model.

37. A terminal device comprising a processor, a memory, and a computer program or instructions stored in the memory, wherein the processor is configured to execute the computer program or instructions to implement steps of the method of any of claims 1 to 17.

**38.** A network device comprising a processor, a memory, and a computer program or instructions stored in the memory, wherein the processor is configured to execute the computer program or instructions to implement steps of the method of any of claims 18 to 34.

**39.** A chip comprising a processor and a communication interface, wherein the processor is configured to execute steps of the method of any of claims 1 to 17 or 18 to 34.

**40.** A computer-readable storage medium storing a computer program or instructions, which when executed, implements steps of the method of any of claims 1 to 17 or 18 to 34.

FIG. 1

| BITS: | 1 | 1 | 6 |
|---|---|---|---|
| | FIRST TYPE OF BITS | SECOND TYPE OF BITS | THIRD TYPE OF BITS |
| | FIRST TYPE OF BITS | SECOND TYPE OF BITS | THIRD TYPE OF BITS |

FIG. 2

TERMINAL DEVICE

NETWORK DEVICE

S310, FIRST INFORMATION, WHERE THE FIRST INFORMATION INCLUDES REQUEST INFORMATION AND/OR NOTIFICATION INFORMATION, THE REQUEST INFORMATION IS USED TO REQUEST A NETWORK TO DECIDE A STATE OF AN AI MODEL, AND THE NOTIFICATION INFORMATION IS USED TO NOTIFY THE NETWORK OF A DECISION RESULT INFORMATION OF THE STATE OF THE AI MODEL

FIG. 3

400

COMMUNICATION APPARATUS

401

SENDING UNIT

FIG. 4

500

COMMUNICATION
APPARATUS

501

RECEIVING
UNIT

FIG. 5

TERMINAL DEVICE
600

PROCESSOR
610

MEMORY 620

COMPUTER PROGRAM
OR INSTRUCTIONS 621

FIG. 6

NETWORK DEVICE
700

PROCESSOR
710

MEMORY 720

COMPUTER PROGRAM
OR INSTRUCTIONS 721

FIG. 7

## INTERNATIONAL SEARCH REPORT

| International application No. |
| --- |
| **PCT/CN2023/140625** |

### A. CLASSIFICATION OF SUBJECT MATTER

H04L41/16(2022.01)i

According to International Patent Classification (IPC) or to both national classification and IPC

### B. FIELDS SEARCHED

Minimum documentation searched (classification system followed by classification symbols)

IPC: H04L, H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, 3GPP: 人工智能, 空口, 请求, 告知, 模型, 决策, AI, CSI, MAC CE, PUCCH, request, model, strategy

### C. DOCUMENTS CONSIDERED TO BE RELEVANT

| Category* | Citation of document, with indication, where appropriate, of the relevant passages | Relevant to claim No. |
| --- | --- | --- |
| X | CN 114143799 A (HUAWEI TECHNOLOGIES CO., LTD.) 04 March 2022 (2022-03-04) description, paragraphs [0089]-[0303] | 1-40 |
| A | CN 114916026 A (GUANGDONG OPPO MOBILE TELECOMMUNICATIONS CORP., LTD.) 16 August 2022 (2022-08-16) entire document | 1-40 |
| A | CN 115150847 A (HUAWEI TECHNOLOGIES CO., LTD.) 04 October 2022 (2022-10-04) entire document | 1-40 |
| A | WO 2022105876 A1 (HUAWEI TECHNOLOGIES CO., LTD.) 27 May 2022 (2022-05-27) entire document | 1-40 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 March 2024** | **13 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140625**

| Patent document cited in search report | | | Publication date (day/month/year) | Patent family member(s) | | | Publication date (day/month/year) |
|---|---|---|---|---|---|---|---|
| CN | 114143799 | A | 04 March 2022 | None | | | |
| CN | 114916026 | A | 16 August 2022 | None | | | |
| CN | 115150847 | A | 04 October 2022 | WO | 2022206513 | A1 | 06 October 2022 |
| WO | 2022105876 | A1 | 27 May 2022 | EP | 4228330 | A1 | 16 August 2023 |
| | | | | CN | 114615680 | A | 10 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211656563